# EUROPEAN PATENT SPECIFICATION

(11) **EP 4 102 810 B1**
(45) Date of publication and mention of the grant of the patent: **30.04.2025**
(21) Application number: 21750078.4
(22) Date of filing: 19.01.2021
(51) Int. Cl.: H04M 1/02, G02B 5/30, H04N 23/51

(54) **ELECTRONIC DEVICE COMPRISING IMAGE SENSOR**
ELEKTRONISCHE VORRICHTUNG, DIE EINEN BILDSENSOR UMFASST
DISPOSITIF ÉLECTRONIQUE COMPRENANT UN CAPTEUR D'IMAGE

(30) Priority: 05.02.2020 KR 20200013651
(43) Date of publication of application: 14.12.2022
(73) Proprietor: Samsung Electronics Co., Ltd., Suwon-si, Gyeonggi-do 16677 (KR)
(72) Inventor: BAE, Jungbae, Suwon-si, Gyeonggi-do 16677 (KR); KIM, Kwangtai, Suwon-si, Gyeonggi-do 16677 (KR)
(74) Representative: HGF
(86) International application number: PCT/KR2021/000725
(87) International publication number: WO 2021/157906

(56) References cited:
- WO-A1-2014/123210
- WO-A1-2019/006749
- CN-A- 108 769 306
- CN-A- 110 610 965
- KR-A- 20180 126 883
- US-A1- 2011 194 048
- US-A1- 2015 362 647
- US-A1- 2015 378 078
- US-A1- 2018 357 462

## Description

### Technical Field

Various embodiments of the disclosure relate to an electronic device including an image sensor.

### Background Art

Electronic devices (e.g. portable electronic devices) are being released in various sizes according to functions and users' preferences, and may include a large-screen touch display for securing wide visibility and convenience of operation. An electronic device may include at least one camera module. For example, an electronic device may include at least one image sensor (e.g. a camera module) disposed around a display or through at least a portion of the display.

CN108769306A appears to disclose an electronic device having a high screen ratio and a good photographing effect, where the electronic device comprises a display with a camera located under the display, and a polarizer. WO2014/123210 A1 appears to disclose an image display device, which has a white light source with a continuous light emission spectrum; an image display cell; a polarizer on a viewing side from the image display cell; and two alignment films having a retardation of 3,000 nm to 150,000 nm on the viewing side from the polarizer.

### Disclosure of Invention

### Technical Problem

In an electronic device to which an under-display camera (UDC) is applied, since display drive is also necessary in an area corresponding to an image sensor (e.g. a camera), a polarizing film (POL) may be disposed on a display panel and a protective film may be disposed on the uppermost layer. Since the polarizing film is disposed on the image sensor (or a camera module), when the polarizing film has a phase difference, rainbow color unevenness occurs when photographing a polarized subject, and the quality of images and videos is deteriorated.

Various embodiments of the disclosure are able to provide an electronic device including an image sensor (e.g. a camera module) capable of preventing rainbow color unevenness from appearing when a polarized subject is photographed.

### Technical Solution

The scope of the protection conferred is determined by the appended claims.

An electronic device according to various embodiments of the disclosure may include a housing, a display, and one or more image sensors. The housing may include a front surface, a rear surface, and a side surface at least partially surrounding the space between the front surface and the rear surface. The display may be disposed in the inner space of the housing to be visible from exterior and may include a display area. The one or more image sensors may be disposed under the display to overlap the display area. The display may include a display panel, a polarizing layer disposed on the display panel, and an optical compensation film disposed on the polarizing layer. The optical compensation film may have a phase difference of 2,000 to 8,000 nm.

An electronic device according to various embodiments of the disclosure may include a housing, a display, and one or more image sensors. The housing may include a front surface, a rear surface, and a side surface at least partially surrounding the space between the front surface and the rear surface. The display may be disposed in the inner space of the housing to be visible from exterior and may include a display area. The one or more image sensors may be disposed under the display to overlap the display area. The display may include a display panel, a window glass disposed on the display panel, and an optical compensation film disposed adjacent to the window glass. The optical compensation film may have a phase difference of 2,000 to 8,000 nm.

An electronic device according to various embodiments of the disclosure may include a housing, a display, and one or more image sensors. The housing may include a front surface, a rear surface, and a side surface at least partially surrounding the space between the front surface and the rear surface. The display may be disposed in the inner space of the housing to be visible from exterior and may include a display area. The one or more image sensors may be disposed under the display to overlap the display area. The display may include a display panel, a polarizing layer disposed on the display panel, a window glass disposed on the polarizing layer, and a protective film and an optical compensation film which are disposed side by side in a horizontal direction on the window glass. The optical compensation film may have a phase difference of 2,000 to 8,000 nm.

### Advantageous Effects of Invention

According to various embodiments of the disclosure, an image sensor (e.g. a camera module) is disposed under a display panel, and no opening is provided in a display area corresponding to an image sensor, which may be advantageous for manufacturing a display panel.

According to various embodiments of the disclosure, an optical compensation film is disposed on the display panel, so that it is possible to prevent the rainbow color unevenness from appearing on the polarized subject, which makes it possible to improve image and video quality of an electronic device.

In addition, various effects directly or indirectly identified through the disclosure may be provided.

### Brief Description of Drawings

FIG. 1 is a block diagram of a display device according to various embodiments of the disclosure.
FIG. 2 is a block diagram of an electronic device according to various embodiments of the disclosure in a network environment.
FIG. 3A is a front perspective view of a mobile electronic device according to various embodiments of the disclosure.
FIG. 3B is a rear perspective view of the mobile electronic device of FIG. 3A according to various embodiments of the disclosure.
FIG. 4 is an exploded perspective view illustrating an electronic device according to various embodiments of the disclosure.
FIG. 5A is a view illustrating an electronic device according to an embodiment in an unfolded state.
FIG. 5B is a view illustrating an electronic device according to an embodiment in a folded state.
FIG. 6A is a cross-sectional view of an electronic device according to various embodiments of the disclosure.
FIG. 6B is a cross-sectional view of the electronic device according to various embodiments of the disclosure.
FIG. 6C is a view illustrating a display and an image sensor according to various embodiments of the disclosure.
FIG. 6D is a view illustrating a form in which pixels are arranged in an under-display camera (UDC) area according to various embodiments of the disclosure.
FIG. 7A is a view illustrating a display and image sensors according to various embodiments of the disclosure.
FIG. 7B is a view illustrating a pixel arrangement of an under-display camera (UDC) area of a display according to various embodiments of the disclosure.
FIG. 8A is a view illustrating a display and image sensors according to various embodiments of the disclosure.
FIG. 8B is a view illustrating a display and an image sensor according to various embodiments of the disclosure.
FIG. 8C is a view illustrating a display and an image sensor according to various embodiments of the disclosure.
FIG. 9 is a view illustrating a display and an image sensor according to various embodiments of the disclosure.
FIG. 10A is a view illustrating a display and image sensors according to various embodiments of the disclosure.
FIG. 10B is a plan view illustrating a shape of an optical compensation film (OCF) disposed on an under-display camera (UDC) area according to various embodiments of the disclosure.
FIG. 11A is a view illustrating a display and image sensors according to various embodiments of the disclosure.
FIG. 11B is a plan view illustrating a shape of an optical compensation film (OCF) disposed on an under-display camera (UDC) area according to various embodiments of the disclosure.
FIG. 12 is a plan view illustrating a shape of an optical compensation film (OCF) disposed on an under-display camera (UDC) area according to various embodiments of the disclosure.
FIG. 13 is a plan view illustrating a shape of an optical compensation film (OCF) disposed on an under-display camera (UDC) area according to various embodiments of the disclosure.
FIG. 14 is a plan view illustrating a shape of an optical compensation film (OCF) disposed on an under-display camera (UDC) area according to various embodiments of the disclosure.
FIG. 15A is a view illustrating a display and image sensors according to various embodiments of the disclosure.
FIG. 15B is a view illustrating a display and an image sensor according to various embodiments of the disclosure.

In connection with the description of the drawings, the same or similar components may be denoted by the same or similar reference numerals.

### Best Mode for Carrying out the Invention

Hereinafter, various embodiments will be described with reference to the accompanying drawings. For convenience of description, the components illustrated in the drawings may be exaggerated or reduced in size, and the disclosure is not necessarily limited to the illustrated ones.

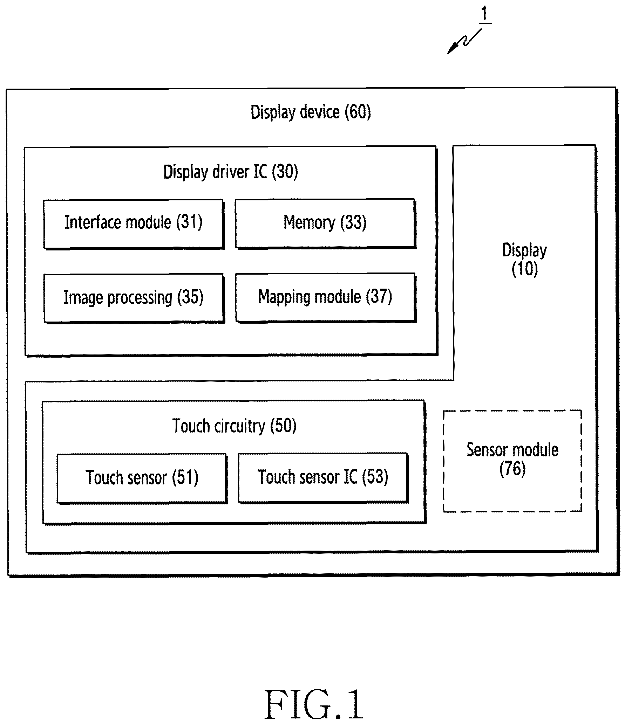

Fig. 1 is a block diagram 1 illustrating the display device 60 according to various embodiments.

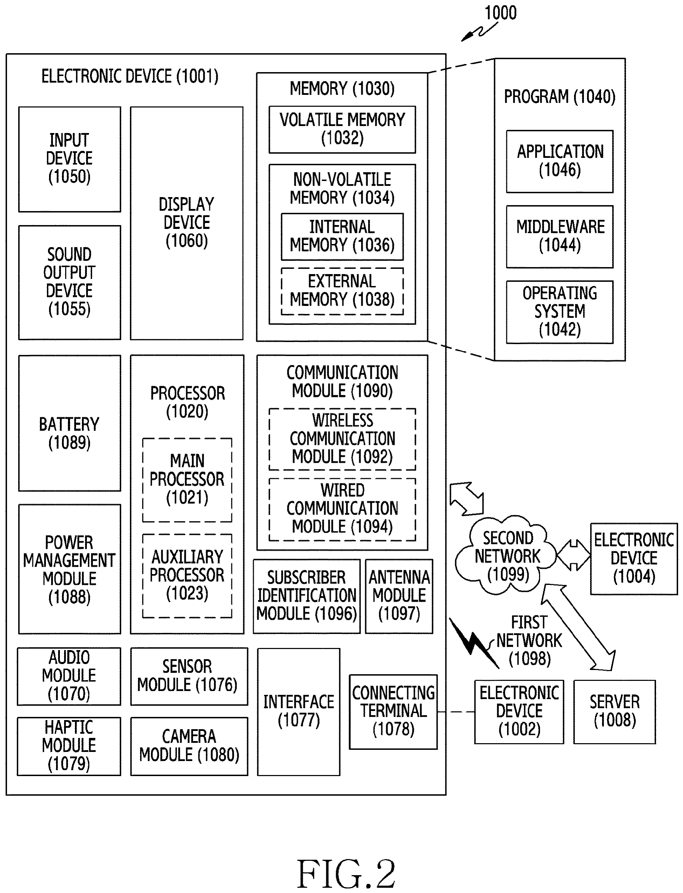

Referring to Fig. 1, the display device 60 may include a display 10 and a display driver integrated circuit (DDI) 30 to control the display 10. The DDI 30 may include an interface module 31, memory 33 (e.g. buffer memory), an image processing module 35, or a mapping module 37. The DDI 30 may receive image information that contains image data or an image control signal corresponding to a command to control the image data from another component of the electronic device (for example, an electronic device 1010 of Fig. 2) via the interface module 31. For example, according to an embodiment, the image information may be received from the processor (e.g. a processor 1020 of Fig. 2) (e.g. the main processor 1021 (e.g. an application processor)) or the auxiliary processor 1023 (e.g. a graphics processing unit) operated independently from the function of the main processor 1021. The DDI 30 may communicate, for example, with touch circuitry 50 or the sensor module 76 via the interface module 31. The DDI 30 may also store at least part of the received image information in the memory 33, for example, on a frame by frame basis. The image processing module 35 may perform pre-processing or post-processing (e.g. adjustment of resolution, brightness, or size) with respect to at least part of the image data. According to an embodiment, the pre-processing or post-processing may be performed, for example, based at least in part on one or more characteristics of the image data or one or more characteristics of the display 10. The mapping module 37 may generate a voltage value or a current value corresponding to the image data pre-processed or post-processed by the image processing module 35. According to an embodiment, the generating of the voltage value or current value may be performed, for example, based at least in part on one or more attributes of the pixels (e.g. an array, such as an RGB stripe or a pentile structure, of the pixels, or the size of each subpixel). At least some pixels of the display 10 may be driven, for example, based at least in part on the voltage value or the current value such that visual information (e.g. a text, an image, or an icon) corresponding to the image data may be displayed via the display 10.

According to an embodiment, the display device 60 may further include the touch circuitry 50. The touch circuitry 50 may include a touch sensor 51 and a touch sensor IC 53 to control the touch sensor 51. The touch sensor IC 53 may control the touch sensor 51 to sense a touch input or a hovering input with respect to a certain position on the display 10. To achieve this, for example, the touch sensor 51 may detect (e.g. measure) a change in a signal (e.g. a voltage, a quantity of light, a resistance, or a quantity of one or more electric charges) corresponding to the certain position on the display 10. The touch circuitry 50 may provide input information (e.g. a position, an area, a pressure, or a time) indicative of the touch input or the hovering input detected via the touch sensor 51 to the processor (the processor 1020 of Fig. 2). According to an embodiment, at least part (e.g. the touch sensor IC 53) of the touch circuitry 50 may be formed as part of the display 10 or the DDI 30, or as part of another component (e.g. the auxiliary processor 1023 of Fig. 2) disposed outside the display device 60.

According to an embodiment, the display device 60 may further include at least one sensor (e.g. a fingerprint sensor, an iris sensor, a pressure sensor, or an illuminance sensor) of the sensor module 76 or a control circuit for the at least one sensor. In such a case, the at least one sensor or the control circuit for the at least one sensor may be embedded in one portion of a component (e.g. the display 10, the DDI 30, or the touch circuitry 50)) of the display device 60. For example, when the sensor module 76 embedded in the display device 60 includes a biometric sensor (e.g. a fingerprint sensor), the biometric sensor may obtain biometric information (e.g. a fingerprint image) corresponding to a touch input received via a portion of the display 10. As another example, when the sensor module 76 embedded in the display device 60 includes a pressure sensor, the pressure sensor may obtain pressure information corresponding to a touch input received via a partial or whole area of the display 10. According to an embodiment, the touch sensor 51 or the sensor module 1076 may be disposed between pixels in a pixel layer of the display 10, or over or under the pixel layer.

Fig. 2 is a block diagram illustrating an electronic device 1001 in a network environment 1000 according to various embodiments.

Referring to Fig. 2, the electronic device 1001 in the network environment 1000 may communicate with an electronic device 1002 via a first network 1098 (e.g., a short-range wireless communication network), or an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input device 1050, a sound output device 1055, a display device 1060 (e.g., display device 60 of Fig. 1), an audio module 1070, a sensor module 1076, an interface 1077, a haptic module 1079, a camera module 1080, a power management module 1088, a battery 1089, a communication module 1090, a subscriber identification module (SIM) 1096, or an antenna module 1097. In some embodiments, at least one (e.g., the display device 1060 or the camera module 1080) of the components may be omitted from the electronic device 1001, or one or more other components may be added in the electronic device 1001. In some embodiments, some of the components may be implemented as single integrated circuitry. For example, the sensor module 1076 (e.g., a fingerprint sensor, an iris sensor, or an illuminance sensor) may be implemented as embedded in the display device 1060 (e.g., a display).

The processor 1020 may execute, for example, software (e.g., a program 1040) to control at least one other component (e.g., a hardware or software component) of the electronic device 1001 coupled with the processor 1020, and may perform various data processing or computation. According to one embodiment, as at least part of the data processing or computation, the processor 1020 may load a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), and an auxiliary processor 1023 (e.g., a graphics processing unit (GPU), an image signal processor (ISP), a sensor hub processor, or a communication processor (CP)) that is operable independently from, or in conjunction with, the main processor 1021. Additionally or alternatively, the auxiliary processor 1023 may be adapted to consume less power than the main processor 1021, or to be specific to a specified function. The auxiliary processor 1023 may be implemented as separate from, or as part of the main processor 1021.

The auxiliary processor 1023 may control at least some of functions or states related to at least one component (e.g., the display device 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication module 1090) functionally related to the auxiliary processor 1023.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040may be stored in the memory 1030 as software, and may include, for example, an operating system (OS) 1042, middleware 1044, or an application 1046.

The input device 1050 may receive a command or data to be used by another component (e.g., the processor 1020) of the electronic device 1001, from the outside (e.g., a user) of the electronic device 1001. The input device 1050 may include, for example, a microphone, a mouse, a keyboard, or a digital pen (e.g., a stylus pen).

The sound output device 1055 may output sound signals to the outside of the electronic device 1001. The sound output device 1055 may include, for example, a speaker or a receiver. The speaker may be used for general purposes, such as playing multimedia or playing record, and the receiver may be used for an incoming call. According to an embodiment, the receiver may be implemented as separate from, or as part of the speaker.

The display device 1060 may visually provide information to the outside (e.g., a user) of the electronic device 1001. The display device 1060 may include, for example, a display, a hologram device, or a projector and control circuitry to control a corresponding one of the display, hologram device, and projector. According to an embodiment, the display device 1060 may include touch circuitry adapted to detect a touch, or sensor circuitry (e.g., a pressure sensor) adapted to measure the intensity of force incurred by the touch.

The audio module 1070 may convert a sound into an electrical signal and vice versa. According to an embodiment, the audio module 1070 may obtain the sound via the input device 1050, or output the sound via the sound output device 1055 or a headphone of an external electronic device (e.g., an electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, a HDMI connector, a USB connector, a SD card connector, or an audio connector (e.g., a headphone connector).

The haptic module 1079 may convert an electrical signal into a mechanical stimulus (e.g., a vibration or a movement) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to one embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as BluetoothTM, wireless-fidelity (Wi-Fi) direct, or infrared data association (IrDA)) or the second network 1099 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The antenna module 1097 may transmit or receive a signal or power to or from the outside (e.g., the external electronic device) of the electronic device 1001. According to an embodiment, the antenna module 1097 may include an antenna including a radiating element composed of a conductive material or a conductive pattern formed in or on a substrate (e.g., PCB). According to an embodiment, the antenna module 1097 may include a plurality of antennas. In such a case, at least one antenna appropriate for a communication scheme used in the communication network, such as the first network 1098 or the second network 1099, may be selected, for example, by the communication module 1090 (e.g., the wireless communication module 1092) from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device 1004 via the server 1008 coupled with the second network 1099. Each of the electronic devices 1002 and 1004 may be a device of a same type as, or a different type, from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, or client-server computing technology may be used, for example.

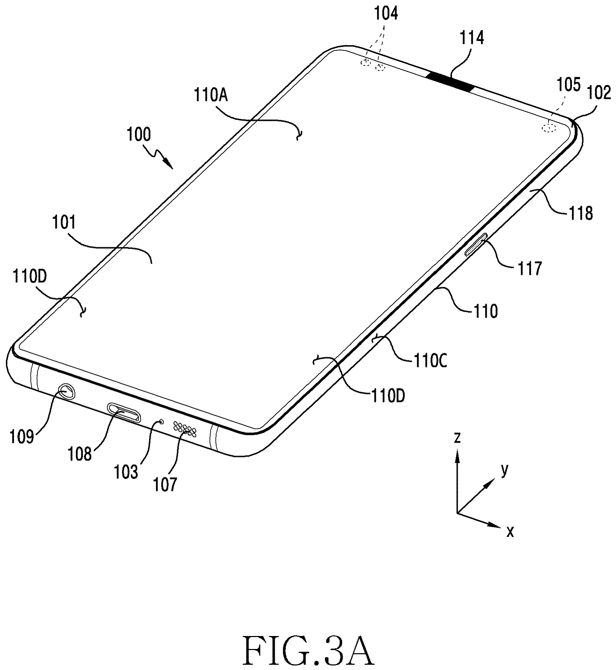

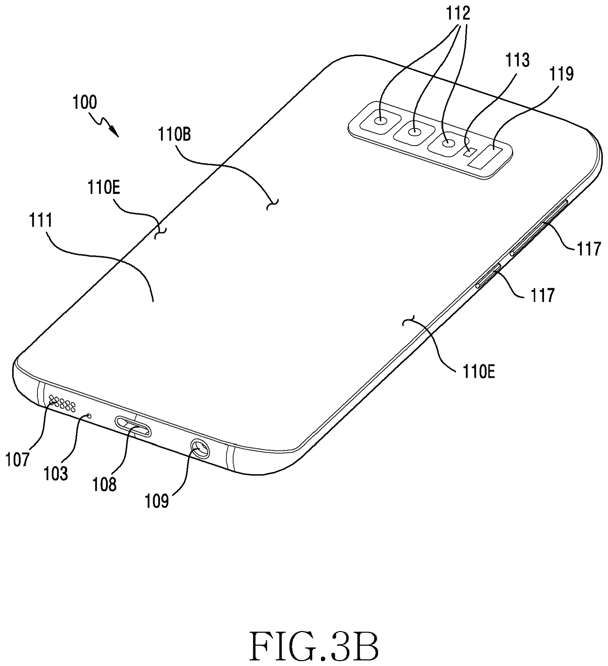

FIG. 3A is a front perspective view of a mobile electronic device 100 according to various embodiments of the disclosure. FIG. 3B is a rear perspective view of the mobile electronic device 100 of FIG. 3A according to the present disclosure.

Referring to FIGS. 3A and 3B, an electronic device 100 according to an embodiment may include: a housing 110 including a first surface (or a front surface) 110A, a second surface (or a rear surface) 110B, and a side surface 110C surrounding a space between the first surface 110A and the second surface 110B. In another embodiment (not illustrated), the housing may refer to a structure defining some of the first surface 110A, the second surface 110B, and the side surface 110C of FIG. 1. According to an embodiment, at least a portion of the first surface 110A may be defined by a substantially transparent front plate 102 (e.g., a glass plate or a polymer plate including various coating layers). The second surface 110B may be defined by the substantially opaque rear plate 111. The rear plate 111 may be made of, for example, coated or colored glass, ceramic, polymer, metal (e.g., aluminum, stainless steel (STS), or magnesium), or a combination of two or more of these materials. The side surface 110C may be defined by a side bezel structure 118 (or a "side member") coupled to the front plate 102 and the rear plate 111 and including metal and/or polymer. In some embodiments, the rear plate 111 and the side bezel structure 118 may be integrally configured, and may include the same material (e.g., a metal material such as aluminum).

In the illustrated embodiment, the front plate 102 may include two first areas 110D, which are bent from the first surface 110A toward the rear plate 111 and extend seamlessly, at the long opposite side edges thereof. In the illustrated embodiment (see FIG. 3B), the rear plate 111 may include two second areas 110E, which are bent from the second surface 110B toward the front plate 102 and extend seamlessly, at the long opposite side edges thereof. In some embodiments, the front plate 102 (or the rear plate 111) may include only one of the first areas 110D (or the second areas 110E). In some embodiments, some of the first areas 110D and the second areas 110E may not be included. **In** the above-described embodiments, when viewed from a side of the electronic device 100, the side bezel structure 118 may have a first thickness (or width) on the side in which the first areas 110D or the second areas 110E are not included, and may have a second thickness (or width), which is thinner than the first thickness, on the side in which the first areas 110D or the second areas 110E are included.

According to an embodiment, the electronic device 100 may include at least one of a display 101, an input device 103, sound output devices 107 and 114, sensor modules 104 and 119, camera modules 105, 112, and 113, a key input device 117, an indicator (not illustrated), and connectors 108 and 109. **In** some embodiments, in the electronic device 100, at least one of the components (e.g., the key input devices 117 or the indicator) may be omitted, or other components may be additionally included.

The display 101 may be exposed through, for example, a substantial portion of the front plate 102. In some embodiments, at least a portion of the display 101 may be exposed through the front plate 102 defining the first surface 110A and the first areas 110D of the side surface 110C. The display 101 may be coupled to or arranged adjacent to a touch-sensitive circuit, a pressure sensor capable of measuring touch intensity (pressure), and/or a digitizer configured to detect a magnetic field-type stylus pen. In some embodiments, at least some of the sensor modules 104 and 119 and/or at least some of the key input devices 117 may be disposed in the first areas 110D and/or the second areas 110E.

In some embodiments (not illustrated), at least one of the audio module 114, the sensor module 104, the camera modules 105, 112, and 113, and the fingerprint sensor may be included in the rear surface of the screen display area of the display 101. In some embodiments (not illustrated), the display 101 may be coupled to or disposed adjacent to a touch-sensitive circuit, a pressure sensor capable of measuring the intensity of a touch (pressure), and/or a digitizer that detects an electromagnetic-field-type stylus pen. In some embodiments, at least some of the sensor modules 104 and 119 and/or at least some of the key input devices 117 may be disposed in the first areas 110D and/or the second areas 110E.

The input device 103 may include a microphone. In some embodiments, the input device 103 may include a plurality of microphones arranged to sense the direction of sound. The sound output devices 107 and 114 may be referred to as speakers. The speakers 107 and 114 may include an external speaker 107 and a phone call receiver 114. According to some embodiments, the input device 103 (e.g., a microphone), the speakers 107 and 114, and the connectors 108 and 109 are disposed in the space in the electronic device 100, and may be exposed to the external environment through one or more holes provided in the housing 110. According to some embodiments, the holes provided in the housing 110 may be commonly used for the input device 103 (e.g., a microphone) and the speakers 107 and 114. According to some embodiments, the sound output devices 107 and 114 may include a speaker that operates without a hole provided in the housing 110 (e.g., a piezo speaker).

The sensor modules 104 and 119 may generate electrical signals or data values corresponding to the internal operating state or the external environmental state of the electronic device 100. The sensor modules 104 and 119 may include, for example, a first sensor module 104 (e.g., a proximity sensor), a second sensor module (not illustrated) (e.g., a fingerprint sensor) disposed on the first surface 110A of the housing 110, and/or a third sensor module 119 (e.g., an HRM sensor) disposed on the second surface 110B of the housing 110. The fingerprint sensor may be disposed not only on the first surface 110A (e.g., the display 101) of the housing 110, but also on the second surface 110B. The electronic device 100 may further include at least one of sensor modules (not illustrated), such as a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 105, 112, and 113 may include a first camera device 105 disposed on the first surface 110A of the electronic device 100, a second camera device 112 disposed on the second face 110B thereof, and/or a flash 113. The camera devices 105 and 112 may include one or more lenses, an image sensor, and/or an image signal processor. The flash 113 may include, for example, a light-emitting diode or a xenon lamp. The first camera device 105 may be disposed under the display panel in the form of an under-display camera (UDC). In some embodiments, two or more lenses (e.g., a wide-angle lens and a telephoto lens) and image sensors may be disposed on one surface of the electronic device 100. In some embodiments, a plurality of first camera devices 105 may be disposed on the first surface of the electronic device 100 (e.g., the surface on which a screen is displayed) in the form of an under-display camera (UDC).

The key input devices 117 may be disposed on the side surface 110C of the housing 110. In another embodiment, the electronic device 100 may not include some or all of the above-mentioned key input devices 117, and the key input devices 117, which are not included in the electronic device 101, may be implemented in another form, such as soft keys, on the display 101. In some embodiments, the key input devices 117 may be implemented using pressure sensors included in the display 101.

The indicator may be disposed, for example, on the first surface 110A of the housing 110. The indicator may provide, for example, the status information of the electronic device 100 in an optical form. In another embodiment, the indicator may provide a light source that is interlocked with, for example, the operation of the camera modules 105, 112, and 113. The indicator may include, for example, an LED, an IR LED, and a xenon lamp.

The connectors 108 and 109 may include a first connector hole 108, which is capable of accommodating a connector (e.g., a USB connector) for transmitting/receiving power and/or data to/from an external electronic device, and/or a second connector hole 109, which is capable of accommodating a connector (e.g., an earphone jack) for transmitting/receiving an audio signal to/from an external electronic device.

A first camera 105 of the camera modules 105 and 112, some of the sensor modules 104 and 119 (e.g., the sensor module 104), or the indicator may be disposed to be visible through the display 101. The first camera device 105 may be disposed to overlap the display area, and may also display a screen in the display area corresponding to the first camera device 105. Some sensor modules 104 may be disposed in the internal space in the electronic device so as to perform the functions thereof without being visually exposed through the front plate 102.

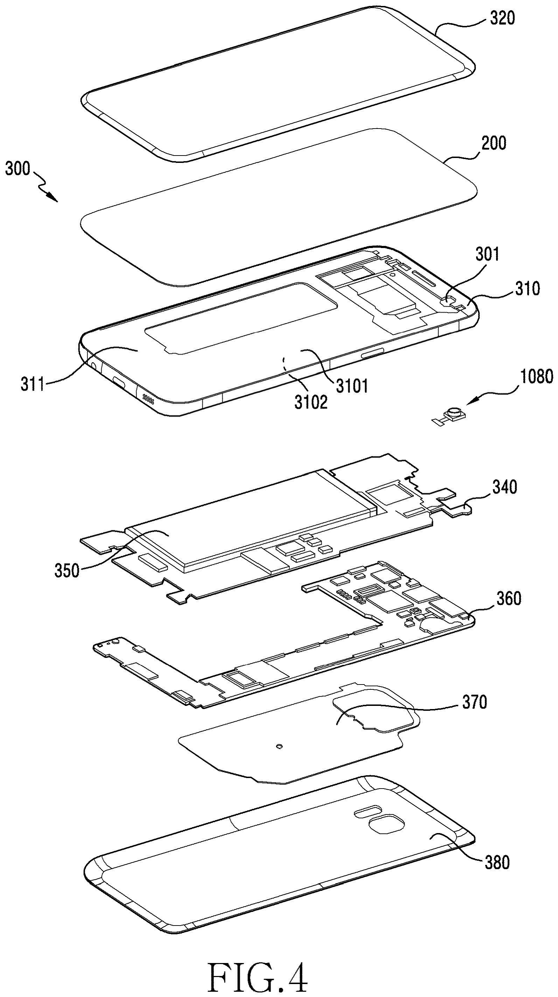

FIG. 4 is an exploded perspective view illustrating an electronic device 300 according to various embodiments.

Referring to FIG. 4, the electronic device 300 (e.g., the electronic device 100 in FIG. 3A) may include a side member 310 (e.g., a side bezel structure), a first support member 311 (e.g., a bracket or a support structure), a front plate 320 (e.g., a front cover), a display 200, a printed circuit board 340, a battery 350, a second support member 360 (e.g., a rear case), an antenna 370, and a rear plate 380 (e.g., the rear cover). In some embodiments, in the electronic device 300, at least one of the components (e.g., the first support member 311 or the second support member 360) may be omitted, or other components may be additionally included. At least one of the components of the electronic device 300 may be the same as or similar to at least one of the components of the electronic device 100 of FIG. 1 or FIG. 2, and a redundant description will be omitted below.

The first support member 311 may be disposed inside the electronic device 300 to be connected to the side member 310, or may be integrated with the side member 310. The first support member 311 may be formed of, for example, a metal material and/or a non-metal (e.g., polymer) material. The first support member 311 may include one surface to which the display 200 is coupled and the other surface to which the printed circuit board 340 is coupled. On the printed circuit board 340, a processor, a memory, and/or an interface may be mounted. The processor may include one or more of, for example, a central processing unit, an application processor, a graphics processor, an image signal processor, a sensor hub processor, or a communication processor.

The memory may include, for example, the volatile memory 1032 of FIG. 2 or the non-volatile memory 1034 of FIG. 2.

The interface may include, for example, a high-definition multimedia interface (HDMI), a universal serial bus (USB) interface, an SD card interface, and/or an audio interface. The interface may electrically or physically connect, for example, the electronic device 300 to an external electronic device and may include a USB connector, an SD card/an MMC connector, or an audio connector.

The battery 350 is a device for supplying power to at least one component of the electronic device 300, and may include, for example, a non-rechargeable primary battery, a rechargeable secondary battery, or a fuel cell. At least a portion of the battery 350 may be disposed to be substantially flush with, for example, the printed circuit board 340. The battery 350 may be integrally disposed inside the electronic device 300. **In** another embodiment, the battery 350 may be disposed to be detachable from/attachable to the electronic device 300.

The antenna 370 may be disposed between the rear plate 380 and the battery 350. The antenna 370 may include, for example, a near field communication (NFC) antenna, a wireless charging antenna, and/or a magnetic secure transmission (MST) antenna. The antenna 370 may perform short-range communication with, for example, an external electronic device, or may transmit/receive power required for charging to/from the external device in a wireless manner. In another embodiment, an antenna structure may be formed by a portion of the side member 310, a portion of the first support member 311, or a combination thereof.

According to various embodiments, the first support member 311 of the side member 310 may include a first surface 3101 facing the front plate 320 and a second surface 3102 facing away from the first surface 3101 (e.g., facing the rear plate). According to some embodiments, a camera module 1080 (e.g., the camera module 1080 in FIG. 2) may be disposed between the first support member 311 and the rear plate 380. According to some embodiments, the camera module 1080 may be disposed to protrude to the front plate 320 through a through hole 301 extending from the first surface 3101 to the second surface 3102 of the first support member 311 or to be visible through the front surface 320. According to some embodiments, the portion of the camera module 1080 that protrudes through the through hole 301 may be disposed to detect the external environment at the corresponding position of the display 200. As another example, when the camera module 1080 is disposed between the display 200 and the first support member 311, the through hole 301 may be unnecessary.

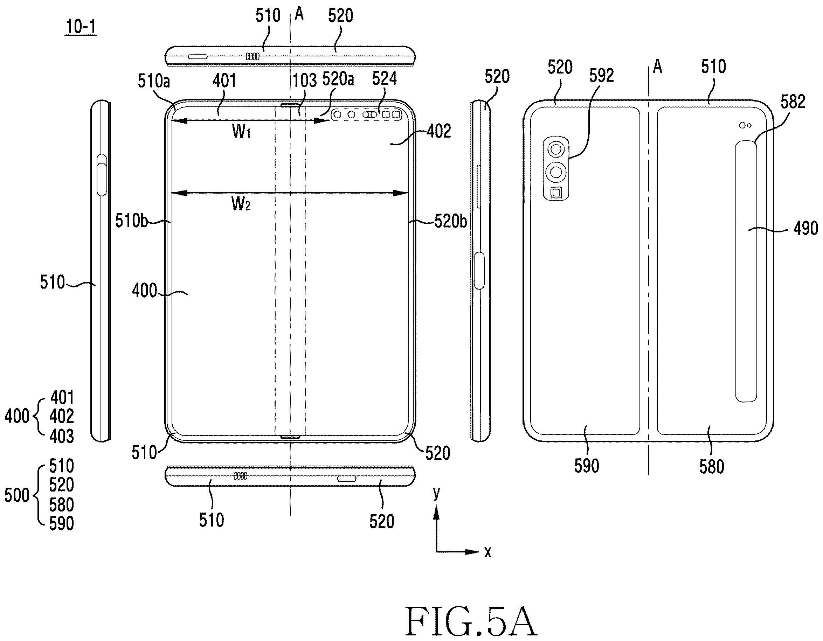

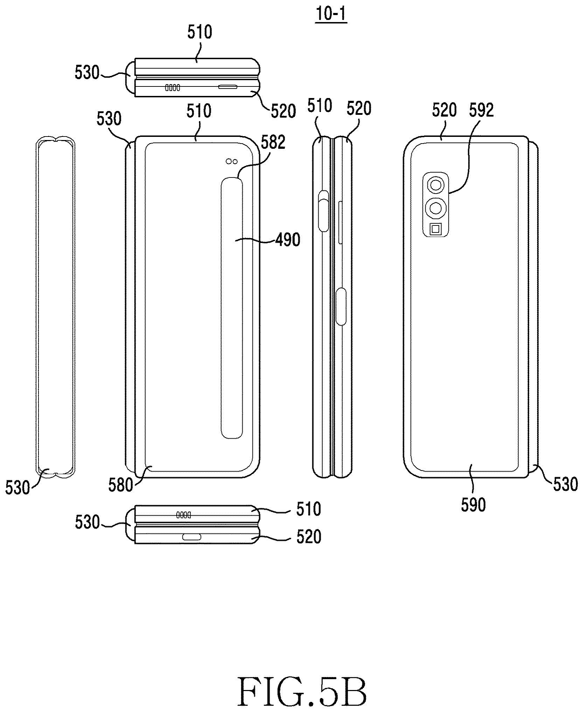

FIG. 5A is a view illustrating an electronic device according to an embodiment in an unfolded state. FIG. 5B is a view illustrating an electronic device according to an embodiment in a folded state.

Referring to FIGS. 5A and 5B, in an embodiment, an electronic device 10-1 may include a foldable housing 500, a hinge cover 530 that covers the foldable portion of the foldable housing, and a flexible or foldable display 400 (hereinafter, referred to as a "display" 400 for short) disposed in a space defined by the foldable housing 500. Herein, the surface on which the display 400 is disposed is defined as a first surface or the front surface of the electronic device 10-1. The surface opposite to the front surface is defined as a second surface or the rear surface of the electronic device 10-1. **In** addition, the surface surrounding the space between the front surface and the rear surface is defined as a third surface or the side surface of the electronic device 10-1.

In an embodiment, the foldable housing 500 may include a first housing structure 510, a second housing structure 520 including a sensor area 524, a first rear cover 580, and a second rear cover 590. The foldable housing 500 of the electronic device 10-1 is not limited to the shape and assembly illustrated in FIGS. 1 and 2, but may be implemented by combinations and/or assemblies of other shapes or components. For example, in another embodiment, the first housing structure 510 and the first rear cover 580 may be integrated with each other, and the second housing structure 520 and the second rear cover 590 may be integrated with each other.

In the illustrated embodiment, the first housing structure 510 and the second housing structure 520 may be disposed on opposite sides about a folding axis (axis A), and may have generally symmetrical shapes about the folding axis A. As will be described later, the first housing structure 510 and the second housing structure 520 may have different angles or distances therebetween depending on whether the electronic device 10-1 is in the unfolded state, in the folded state, or in the intermediate state. In the illustrated state, unlike the first housing structure 510, the second housing structure 520 may further include the sensor area 524 in which various sensors are disposed, but the first housing structure and the second housing structure may have mutually symmetrical shapes in other areas.

In an embodiment, as illustrated in FIG. 1, the first housing structure 510 and the second housing structure 520 may form together a recess that accommodates the display 400 therein. In the illustrated embodiment, due to the sensor area 524, the recess may have two or more different widths in a direction perpendicular to the folding axis A.

For example, the recess may have a first width W₁ between a first portion 510a of the first housing structure 510 parallel to the folding axis A and a first portion 520a of the second housing structure 520 disposed at an edge of the sensor area 524. The recess may have a second width W₂ defined by a second portion 510b of the first housing structure 510 and a second portion 520b of the second housing structure 520 that is parallel to the folding axis A but does not correspond to the sensor area 524. In this case, the second width w₂ may be longer than the first width w₁. In other words, the first portion 510a of the first housing structure 510 and the first portion 520a of the second housing structure 520, which are asymmetric to each other, may define the first width w₁ of the recess, and the second portion 510b of the first housing structure 510 and the second portion 520b of the second housing structure 520, which are symmetric to each other, may define the second width w₂ of the recess. In an embodiment, the first portion 520a and the second portion 520b of the second housing structure 520 may have different distances from the folding axis A, respectively. The widths of the recess are not limited to the illustrated example. In various embodiments, the recess may have multiple widths due to the shape of the sensor area 524 or due to the asymmetric portions of the first housing structure 510 and the second housing structure 520.

In an embodiment, at least a portion of the first housing structure 510 and at least a portion of the second housing structure 520 may be formed of a metal material or a non-metal material having a rigidity of a level selected in order to support the display 400.

According to an embodiment, the sensor area 524 may have a predetermined area adjacent to one corner of the second housing structure 520. However, the arrangement, shape, and size of the sensor area 524 are not limited to the illustrated example. For example, in another embodiment, the sensor area 524 may be provided at another corner of the second housing structure 520 or in any area between the upper and lower end corners. In an embodiment, components embedded in the electronic device 10-1 to perform various functions may be exposed to the front surface of the electronic device 10-1 through the sensor area 524 or one or more openings provided in the sensor area 524. In various embodiments, the components may include various types of sensors. The sensors may include at least one of, for example, a front camera, a receiver, or a proximity sensor.

The first rear cover 580 may be disposed on one side of the folding axis in the rear surface of the electronic device, and may have, for example, a substantially rectangular periphery. The periphery may be enclosed by the first housing structure 510. Similarly, the second rear cover 590 may be disposed on the other side of the folding axis in the rear surface of the electronic device, and the periphery of the second rear cover 590 may be enclosed by the second housing structure 520.

In the illustrated embodiment, the first rear cover 580 and the second rear cover 590 may have substantially symmetrical shapes about the folding axis (the axis A). However, the first rear cover 580 and the second rear cover 590 do not necessarily have mutually symmetrical shapes. In another embodiment, the electronic device 10-1 may include the first rear cover 580 and the second rear cover 590 having various shapes. In another embodiment, the first rear cover 580 may be integrated with the first housing structure 510, and the second rear cover 590 may be integrated with the second housing structure 520.

In an embodiment, the first rear cover 580, the second rear cover 590, the first housing structure 510, and the second housing structure 520 may define a space in which various components (e.g., a printed circuit board or a battery) of the electronic device 10-1 may be disposed. In an embodiment, one or more components may be disposed or visually exposed on the rear surface of the electronic device 10-1. For example, at least a portion of a sub-display 190 may be visually exposed through a first rear area 582 of the first rear cover 580. In another embodiment, one or more components or sensors may be visually exposed through a second rear area 592 of the second rear cover 590. In various embodiments, the sensors may include a proximity sensor and/or a rear camera.

Referring to FIG. 5B, the hinge cover 530 may be disposed between the first housing structure 510 and the second housing structure 520 so as to cover internal components (e.g., the hinge structure). In an embodiment, the hinge cover 530 may be covered by a portion of the first housing structure 510 and a portion of the second housing structure 520 or exposed to the outside depending on the state of the electronic device 10-1 (the unfolded state (flat state) or the folded state).

For example, as illustrated in FIG. 5A, when the electronic device 10-1 is in the unfolded state, the hinge cover 530 may not be exposed by being covered by the first housing structure 510 and the second housing structure 520. For example, as illustrated in FIG. 5B, when the electronic device 10-1 is in the folded state (e.g., the fully folded state), the hinge cover 530 may be exposed to the outside between the first housing structure 510 and the second housing structure 520. As an example, when the first housing structure 510 and the second housing structure 520 are in the intermediate state in which the first housing structure 510 and the second housing structure 520 are folded to form a predetermined angle therebetween, the hinge cover 530 may be partially exposed to the outside between the first housing structure 510 and the second housing structure 520. However, in this case, the area exposed in this case may be smaller than that in the fully folded state. In an embodiment, the hinge cover 530 may include a curved surface.

The display 400 may be disposed in a space defined by the foldable housing 500. For example, the display 400 may be seated in the recess defined by the foldable housing 500, and may constitute most of the front surface of the electronic device 10-1.

Accordingly, the front surface of the electronic device 10-1 may include the display 400, and a partial area of the first housing structure 510 and a partial area of the second housing structure 520, which are adjacent to the display 400. In addition, the rear surface of the electronic device 10-1 may include the first rear cover 580, a partial area of the first housing structure 510 adjacent to the first rear cover 580, the second rear cover 590, and a partial area of the second housing structure 520 adjacent to the second rear cover 590.

The display 400 may be a display in which at least a partial area is deformable into a planar surface or a curved surface. In an embodiment, the display 400 may include a folding area 403, a first area 401 disposed on one side of the folding area 403 (e.g., the left side of the folding area 403 illustrated in FIG. 5A), and a second area 402 disposed on the other side of the folding area 403 (e.g., the right side of the folding area 403 illustrated in FIG. 5A). The display 400 may include a polarizing film (or a polarizing layer), window glass (e.g., an ultra-thin glass (UTG) or polymer window), and an optical compensation film (e.g., OCF).

The area division of the display 400 illustrated in FIG. 5A is illustrative, and the display 400 may be divided into multiple areas (e.g., four or more areas, or two areas) depending on the structure or functions thereof. For example, in the embodiment illustrated in FIG. 5A, the areas of the display 400 may be divided by the folding area 403 or the folding axis (the axis A) extending parallel to the Y axis. However, in another embodiment, the areas of the display 400 may be divided based on another folding area (e.g., a folding area parallel to the X axis) or another folding axis (e.g., a folding axis parallel to the X axis).

The first area 401 and the second area 402 may have generally symmetrical shapes about the folding area 403. However, unlike the first area 401, the second area 402 may include a notch cut due to the presence of the sensor area 524, but may have a shape symmetrical to the first area 401 in areas other than the sensor area. In other words, the first area 401 and the second area 402 may include portions having mutually symmetrical shapes and portions having mutually asymmetrical shapes.

Hereinafter, the operations of the first housing structure 510 and the second housing structure 520 and respective areas of the display 400 according to the states of the electronic device 10-1 (e.g., the unfolded state (flat state) and the folded state) will be described.

According to an embodiment, when the electronic device 10-1 is in the unfolded state (flat state) (e.g., FIG. 5A), the first housing structure 510 and the second housing structure 520 may be disposed to form an angle of 180 degrees therebetween and to face the same direction. The surface of the first area 401 and the surface of the second area 402 of the display 400 form 180 degrees relative to each other, and may be oriented in the same direction (e.g., the front direction of the electronic device). The folding area 403 may form the same plane as the first area 401 and the second area 402.

In an embodiment, when the electronic device 10-1 is in the folded state (e.g., FIG. 5B), the first housing structure 510 and the second housing structure 520 may be disposed to face each other. The surface of the first area 401 and the surface of the second area 402 of the display 400 may face each other while forming a narrow angle (e.g., an angle between 0 and 10 degrees) relative to each other. At least a portion of the folding area 403 may be configured as a curved surface having a predetermined curvature.

In an embodiment, when the electronic device 10-1 is in the intermediate state (folded state) (e.g., FIG. 5B), the first housing structure 510 and the second housing structure 520 may be disposed to form a certain angle relative to each other. The surface of the first area 401 and the surface of the second area 402 of the display 400 may form an angle greater than that in the folded state and smaller than that in the unfolded state. At least a portion of the folding area 403 may have a curved surface having a predetermined curvature, and the curvature at this time may be smaller than that in the folded state.

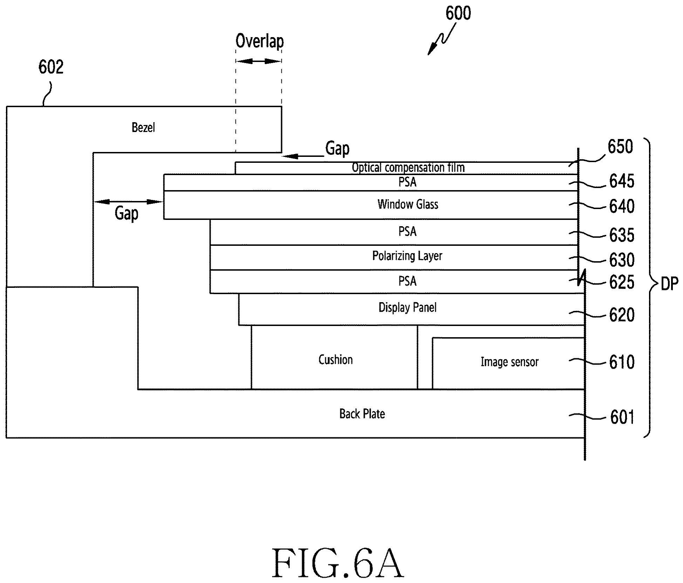

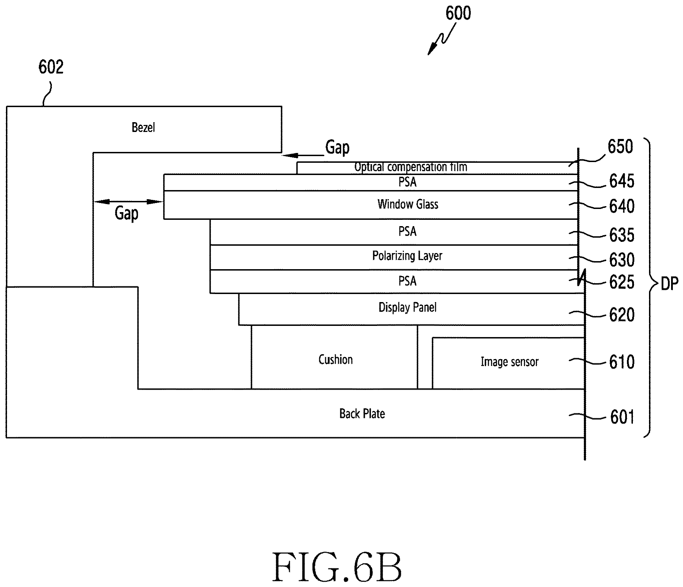

FIGS. 6A and 6B are cross-sectional views of an electronic device according to various embodiments of the disclosure.

Referring to FIGS. 6A and 6B, an electronic device 600 according to various embodiments of the disclosure may include a display (DP), an image sensor 610 (e.g., the camera module 105, 112, and 113 of FIG. 3A or the camera module 1080 of FIGS. 2 and 4) disposed under the display (DP) (or on the rear surface of the display (DP)), a bezel 602 provided to surround a portion of the first surface (or the front surface) and a second surface (or the side surface) of the display, and a rear plate 601 (e.g., a bracket or a support structure) provided to support the third surface (or the rear surface) of the display (DP). The image sensor 610 may be disposed under the display (DP) (or on the rear surface of the display (DP)) in an under-display camera (UDC) type. A cushion may be disposed between the lower portion of the display (DP) and the rear plate 601 to absorb a shock caused by the pressing of the display (DP). The cushion may be disposed on a portion other than the image sensor 610.

FIGS. 6A and 6B illustrate an example in which the bezel 602 and the rear plate 601 are provided as separate components. However, without being limited thereto, the bezel 602 and the rear plate 601 may be integrated into one configuration. The bezel 602 and the rear plate 601 may be formed of, for example, plastic, ceramic, polymer, metal (e.g., aluminum, stainless steel (STS), or magnesium), or a combination of two or more of these materials.

The display (DP) may include a display panel 620, a polarizing layer 630, window glass 640 (e.g., ultra-thin tempered glass (UTG) or a polymer window), and an optical compensation film 650 (OCF).

A first adhesive member 625 (PSA) may be disposed between the top surface of the display panel 620 and the bottom surface of the polarizing layer 630 to attach the display panel 620 and the polarizing layer 630 to each other. A second adhesive member 635 (PSA) may be disposed between the top surface of the polarizing layer 630 and the bottom surface of the window glass 640 to attach the polarizing layer 630 and the window glass 640 to each other. A third adhesive member 645 (PAS) may be disposed between the top surface of the window glass 640 and the bottom surface of the optical compensation film 650 to attach the window glass 640 and the optical compensation film 650 to each other.

The optical compensation film 650 may be disposed to correspond to the entire surface of the polarizing layer 630 and the window glass 640. FIGS. 6A and 6B illustrate an example in which one sheet of window glass 640 is disposed. Without being limited thereto, multiple sheets of window glass may be disposed. As the multiple sheets of window glass, ultra-thin glass (UTG) or polymer windows may be applied.

The polarizing layer 630 may be disposed on the display panel 620. The window glass 640 may be disposed on the polarizing layer 630. The optical compensation film 650 may be disposed on the window glass 640. The optical compensation film 650 may have a function of a protective film for protecting the window glass 640 and a function of a retardation film for preventing rainbow color unevenness according to application of the polarizing layer 630.

The electronic device 600 may be a foldable phone (e.g., the electronic device 10-1 of FIGS. 5A and 5B). As the display (DP), a flexible or foldable display may be applied.

A gap may be provided between the side surface of the display (DP) and the side surface of the bezel 602 in order to prevent the side surface of the display (DP) from coming into contact with the side surface of the bezel 602 and to prevent each layer of the display (DP) from being damaged when the electronic device 600 is folded. In addition, a gap may be provided such that the top surface of the optical compensation film 650 and the upper-side bottom surface of the bezel 602 do not come into contact with each other. As an embodiment, as illustrated in FIG. 6A, the top surface of the optical compensation film 650 and the upper-side bottom surface of the bezel 602 may overlap each other by a predetermined width. As an embodiment, as illustrated in FIG. 6B, the top surface of the optical compensation film 650 and the upper-side bottom surface of the bezel 602 may be disposed not to overlap each other.

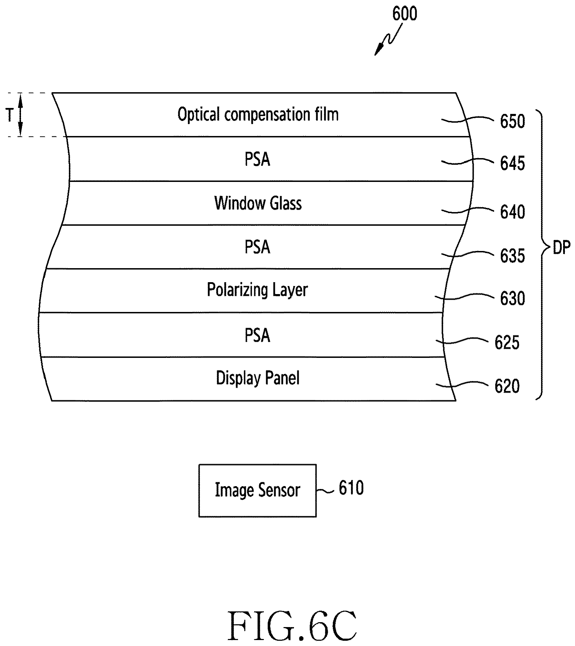

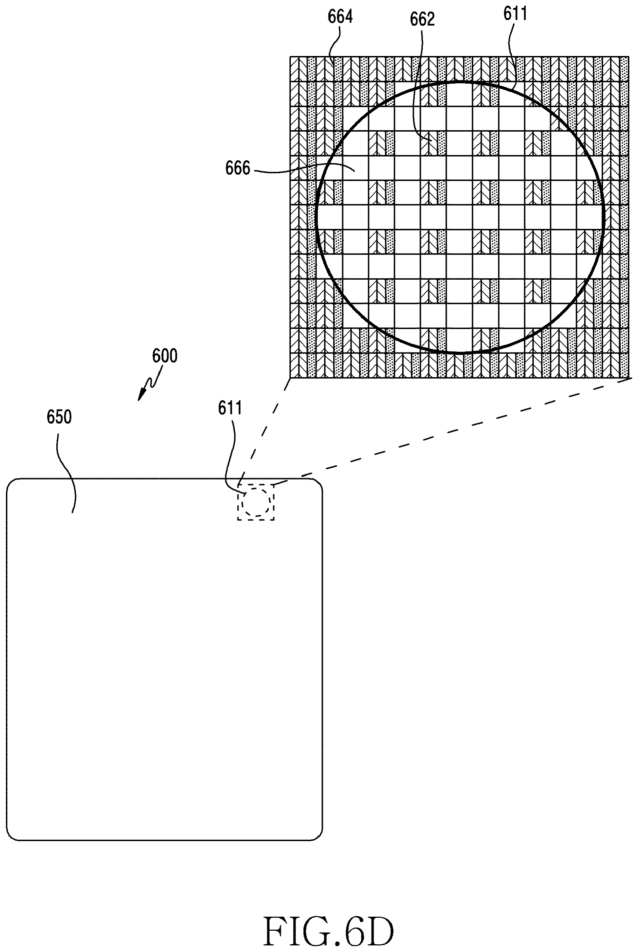

FIG. 6C is a view illustrating a display (DP) and an image sensor 610 according to various embodiments of the disclosure. FIG. 6D is a view illustrating a form in which pixels are arranged in an under-display camera (UDC) area according to various embodiments of the disclosure.

Referring to FIGS. 6C and 6D, an electronic device 600 according to various embodiments of the disclosure may include a display (DP) and an image sensor 610 (e.g., the camera modules 105, 112, and 113 in FIG. 3A or the camera module 1080 in FIGS. 2 and 4). The display (DP) may include a display panel 620, a polarizing layer 630, window glass 640 (e.g., ultra-thin tempered glass (UTG) or a polymer window), and an optical compensation film 650 (OCF). The optical compensation film 650 may be disposed to correspond to the entire surface of the polarizing layer 630 and the window glass 640. FIG. 6C illustrates an example in which one sheet of window glass 640 is disposed. Without being limited thereto, multiple sheets of window glass may be disposed. As the multiple sheets of window glass, ultra-thin glass (UTG) or polymer windows may be applied.

The image sensor 610 (or a camera module) may be disposed under the display panel 620 in an under-display camera (UDC) type. One image sensor 610 may be disposed under the display panel 620. Pixels 662 may also be arranged in the under-display camera area 611 in which the image sensor 610 is disposed, so that an image may be displayed in the under-display camera area. FIG. 6D illustrates an example in which the under-display camera area 611 is disposed at the top right side of the electronic device 600. Without being limited thereto, the under-display camera area 611 may be disposed at the top center, top left side, center, center right side, center left side, bottom right side, bottom center, bottom left side, or the like of the electronic device 600 without being limited in position.

The polarizing layer 630 may be disposed on the display panel 620. The polarizing layer 630 may polarize incident light and output polarized light. The polarizing layer 630 may polarize light incident on the display panel 620 to prevent deterioration of display quality due to light reflection. The window glass 640 may be disposed on the polarizing layer 630. The optical compensation film 650 may be disposed on the window glass 640. The optical compensation film 650 may have a function of a protective film for protecting the window glass 640 and a function of a retardation film for preventing rainbow color unevenness according to application of the polarizing layer 630.

FIG. 6C illustrates an example in which one optical compensation film 650 is disposed on the window glass 640. The disclosure is not limited thereto, and a plurality of optical compensation films may be disposed on the window glass 640. In addition, one optical compensation film 650 may be disposed on the window glass 640, and a protective layer (or a coating layer) may be disposed on the optical compensation film 650.

The optical compensation film 650 may have a protective film or a shock absorption function in addition to the optical compensation function. Therefore, from the viewpoint of the protective film or shock absorption function, a thicker optical compensation film 650 may be preferable. However, in the case of a foldable phone, it is necessary to consider the thickness of the optical compensation film 650 because the folding characteristic is important. In this proposal, the optical compensation film 650 may have a thickness of 20 to 100 µm.

FIG. 6c illustrates an example in which the optical compensation film 650 is disposed on the window glass 640. The disclosure is not limited thereto, and the optical compensation film 650 may be disposed on the polarizing layer 630 without the window glass 640. As an example, the window glass 640 and the optical compensation film 650 may be sequentially disposed on the display panel 620 without the polarizing layer 630.

The first adhesive member 625 may be provided between the display panel 620 and the polarizing layer 630 to bond the display panel 620 and the polarizing layer 630 to each other. The second adhesive member 635 may be provided between the polarizing layer 630 and the window glass 640 to bond the polarizing layer 630 and the window glass 640 to each other. The third adhesive member 645 may be provided between the window glass 640 and the optical compensation film 650 to bond the window glass 640 and the optical compensation film 650 to each other.

The first to third adhesive members 625, 635, and 645 may include an optical clear adhesive (OCA), a pressure-sensitive adhesive (PSA), a heat-reactive adhesive, a general adhesive, or a double-sided tape. In order to facilitate attachment/detachment of the optical compensation film 650 disposed on the window glass 640, the third adhesive member 645 may be configured to have a lower (or weaker) adhesive strength than the first adhesive member 625 and the second adhesive member 635.

According to an embodiment, the display panel 620 and the polarizing layer 630 may be integrated with each other. According to an embodiment, when a color filter formed of red (R), green (G), and blue (B) pigments and having a polarizing function is disposed on each of the pixels of the display panel 620, the polarizing layer 630 may be omitted. Even when the color filter having a polarizing function is applied, the optical compensation film 650 may be disposed on the window glass 640.

According to an embodiment, the polarizing layer 630 disposed above the display panel 620 may include openings perforated at corresponding positions in order to prevent deterioration of the performance of the image sensor 610 due to a refractive index. As an embodiment, at a position corresponding to the image sensor 610, the polarizing layer 630 may be processed to be transparent or the polarizing characteristic may be removed from the polarizing layer 630. As an embodiment, the layers (e.g., the display panel 620) or the touch panel that do not have openings may include a coating capable of index matching in order to minimize a difference in refractive index.

The display panel 620 may be an organic light-emitting diode (OLED) panel, a liquid crystal display (LCD), or a quantum dot light-emitting diode (QLED) panel. The display panel 620 may include a plurality of pixels for displaying an image, and one pixel may include a plurality of sub-pixels. As an embodiment, one pixel may include three color sub-pixels, i.e., a red sub-pixel, a green sub-pixel, and a blue sub-pixel. As an embodiment, one pixel may include four color sub-pixels, i.e., a red sub-pixel, a green sub-pixel, a blue sub-pixel, and a white sub-pixel. As an embodiment, one pixel may be in a RGBG Pen Tile type including one red sub-pixel, two green sub-pixels, and one blue sub-pixel.

According to various embodiments, the display (DP) may include a control circuit (not illustrated). According to an embodiment, the control circuit may include a flexible printed circuit board (FPCB) electrically interconnecting a main printed circuit board and the display panel, and a display driver IC (DDI) (e.g., the display driver IC 30 in FIG. 1) mounted on the FPCB.

According to an embodiment, the display (DP) may additionally include a touch panel (e.g., the touch circuit 50 in FIG. 1). According to an embodiment, the display (DP) may operate as an in-cell type or on-cell type touch display depending on a position at which the touch panel is disposed. When the display 501 operates as an in-cell type, on-cell type, or add-on type touch display, the control circuit may include a touch display driver IC (TDDI). As an embodiment, the display (DP) may include a fingerprint sensor (e.g., the sensor module 76 in FIG. 1 or the sensor module 1076 in FIG. 2) disposed around the control circuit.

According to an embodiment, the fingerprint sensor may include an ultrasonic fingerprint sensor or an optical fingerprint sensor that is capable of recognizing a fingerprint of a finger that comes into contact with or is located adjacent to the outer surface of the front cover through a hole at least partially provided in some of the components of the display (DP).

An image may be displayed on the entire surface of the display DP except for the bezel (e.g., the bezel 602 of FIG. 6A), and the front surface of the display DP (e.g., the surface on which a screen is displayed) may include a display area and an under-display camera area 611. A remaining portion except for the under-display camera area 611 in the front surface of the display DP (e.g., a surface on which a screen is displayed) may be the display area.

Since the image sensor 610 is disposed under the display panel 620 in an under-display camera (UDC) type, it is necessary to secure transmittance in consideration of the quality of a captured image. To this end, the number of pixels 662 arranged in the under-display camera area 611 may be reduced to 1/2, 1/3, 1/4, 1/5, or 1/6 of the number of pixels 664 arranged in the display area. The first pixels 662 may be arranged in an area of 1/2, 1/3, 1/4, 1/5, or 1/6 of the total area of the under-display camera area 611, and the remaining portion may be provided as an empty area 666 (or a non-pixel area) in which no pixels are present. Without being limited thereto, the ratio of the pixels 662 arranged in the camera area 611 may be changed.

FIG. 6D illustrates that pixels 662 of the under-display camera area 611 are regularly arranged. Without being limited thereto, the pixels 662 may be irregularly arranged in the under-display camera area 611. As an embodiment, pixel densities in the central portion and the peripheral portion of the under-display camera area 611 may be different from each other. The central portion of the under-display camera area 611 may have a higher pixel density than the peripheral portion.

FIG. 6D illustrates an example in which the under-display camera area 611 has a circular shape. Without being limited thereto, the under-display camera area 611 may have an elliptical shape or a polygonal shape.

Since a smaller number of pixels 662 are arranged in the under-display camera area 611 than in the display area, the display area and the under-display camera area 611 may display different resolutions. The under-display camera area 611 may be displayed with a lower resolution than that in the display area.

The electronic device 600 may be a foldable phone. Since it is necessary to apply a foldable display (DP) to the foldable phone, the optical compensation film 650 may have a thin thickness. As an example, it is possible to manufacture a thin optical compensation film 650 having a single-layer structure by stretching a polymer material (e.g., polyethylene terephthalate (PET)) having a thickness of 1 to 10 mm. In an embodiment, the optical compensation film 650 may have a thickness of 20 to 100 µm. The optical compensation film 650 may have a phase difference of 2,000 to 8,000 nm.

When the electronic device 600 is a non-foldable phone, as the optical compensation film 650, a polymer film, a cycloolefin polymer (COP) film, a triacetate cellulose (TAC) film, or an acrylic film may be applied. When the electronic device 600 is applied to a non-foldable phone, the optical compensation film 650 may have a thickness of 20 to 100 µm and a phase difference of 2,000 to 8,000 nm.

By disposing the optical compensation film 650 on the polarizing layer 630, due to the phase difference of the optical compensation film 650, it is possible to suppress or prevent the occurrence of rainbow color unevenness when capturing an image of a subject.

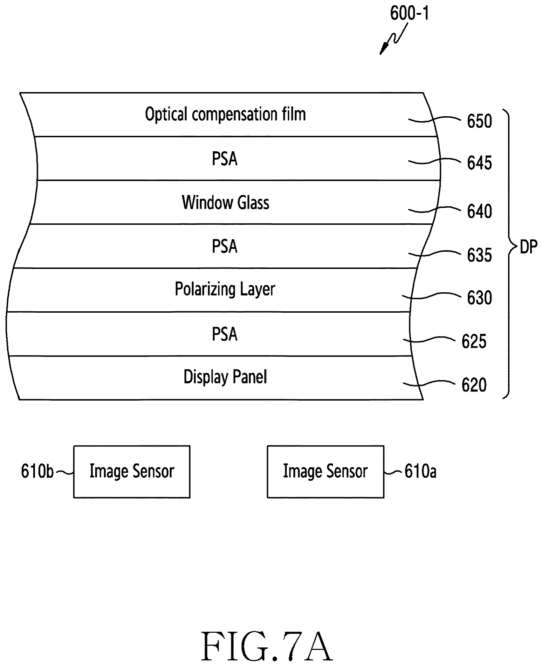

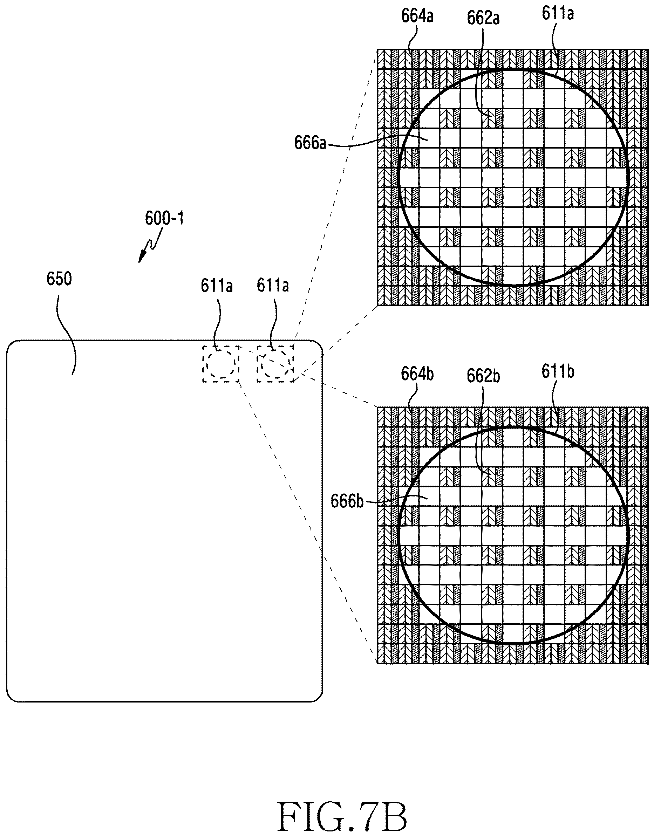

FIG. 7A is a view illustrating a display (DP) and image sensors 610a and 610b according to various embodiments of the disclosure. FIG. 7B is a view illustrating a pixel arrangement of under-display camera (UDC) areas of a display according to various embodiments of the disclosure. In describing an electronic device 600-1 according to various embodiments of the disclosure with reference to FIGS. 7A and 7B, a description of the same components as those of the electronic device 600 of FIGS. 6A, 6B, 6C, and 6D may be omitted.

Referring to FIGS. 7A and 7B, the electronic device 600-1 according to various embodiments of the disclosure may include a display (DP) and a plurality of image sensors 610a and 610b (e.g., the camera modules 105, 112, and 113 in FIG. 3A or the camera module 1080 in FIG. 4). The display (DP) may include a display panel 620, a polarizing layer 630, window glass 640 (e.g., ultra-thin tempered glass (UTG) or a polymer window), and an optical compensation film 650 (OCF). FIG. 7A illustrates an example in which one sheet of window glass 640 is disposed. Without being limited thereto, multiple sheets of window glass may be disposed. As the multiple sheets of window glass, ultra-thin glass (UTG) or polymer windows may be applied.

The optical compensation film 650 may be disposed to correspond to the entire surface of the polarizing layer 630 and the window glass 640. The optical compensation film 650 may have a function of a protective film for protecting the window glass 640 and a function of a retardation film for preventing rainbow color unevenness according to application of the polarizing layer 630.

The first adhesive member 625 may be provided between the display panel 620 and the polarizing layer 630 to bond the display panel 620 and the polarizing layer 630 to each other. The second adhesive member 635 may be provided between the polarizing layer 630 and the window glass 640 to bond the polarizing layer 630 and the window glass 640 to each other. The third adhesive member 645 may be provided between the window glass 640 and the optical compensation film 650 to bond the window glass 640 and the optical compensation film 650 to each other.

The first image sensor 610a and the second image sensor 610b may be disposed under the display panel 620 in an under-display camera (UDC) type. As an example, the first image sensor 610a and the second image sensor 610b may be the same camera module. As an example, the first image sensor 610a and the second image sensor 610b may be different camera modules. The first image sensor 610a and the second image sensor 610b may have different resolutions and different angles of view. As an embodiment, the first image sensor 610a may include an RGB camera, and the second image sensor 610b may include a BW camera. Since pixels 662a are also arranged in the first under-display camera area 611a in which the first image sensor 610a is disposed, an image may be displayed in the first under-display camera area. Since pixels 662b are also arranged in the second under-display camera area 611a in which the second image sensor 610b is disposed, an image may be displayed in the second under-display camera area. FIG. 7B illustrates an example in which the first and second under-display areas 611a and 611b are disposed at the top right side of the electronic device 600-1. However, the present invention is not limited thereto, and the first and second under-display camera areas 611a and 611b be disposed at the top center, top left side, center, center left side, center right side, bottom right side, bottom center, bottom left side, or the like of the electronic device 600-1 without being limited in position.

Since the first image sensor 610a and the second image sensor 610b are disposed under the display panel 620 in the under-display camera (UDC) type, it is necessary to secure transmittance in consideration of the quality of a captured image. To this end, the number of pixels 662a and 662b arranged in the first and second under-display camera areas 611a and 611b may be reduced to 1/2 or 1/3, 1/4, 1/5, or 1/6 of the number of pixels 664a and 664b arranged in the display area.

The pixels 662a and 662b may be arranged in 1/2, 1/3, 1/4, 1/5, or 1/6 of the total area of the first and second under-display camera areas 611a and 611b, and the remaining portion may be configured as empty areas 666a and 666b (or non-pixel areas) in which no pixels are present. FIG. 7B illustrates that the pixels 662a and 662b of the first and second under-display camera areas 611a and 611b are regularly arranged. Without being limited thereto, the pixels 662a and 662b may be irregularly arranged in the first and second under-display camera areas 611a and 611b.

Since a smaller number of pixels 662 are arranged in the first and second under-display camera areas 611a and 611b than in the display area, the display area and the first and second under-display camera areas 611a and 611b may display different resolutions. The resolution displayed in the first and second under-display camera areas 611a and 611b may be lower than the resolution displayed in the display area.

It is possible to manufacture a thin optical compensation film 650 having a single-layer structure by stretching a polymer material (e.g., polyethylene terephthalate (PET)) having a thickness of 1 to 10 mm. In an embodiment, the optical compensation film 650 may have a thickness of 20 to 100 µm. The optical compensation film 650 may have a phase difference of 2,000 to 8,000 nm.

By disposing the optical compensation film 650 on the polarizing layer 630, due to the phase difference of the optical compensation film 650, it is possible to suppress or prevent the occurrence of rainbow color unevenness when capturing an image a subject.

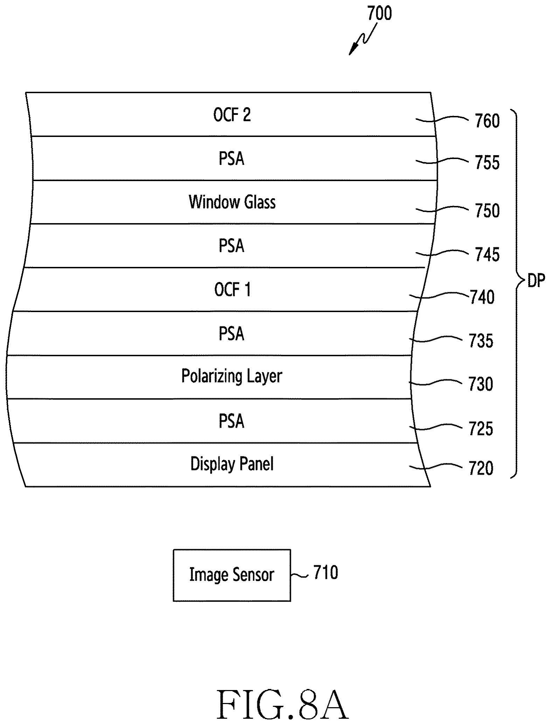

FIG. 8A is a view illustrating a display (DP) and an image sensor 710 according to various embodiments of the disclosure. In describing an electronic device 700 according to various embodiments of the disclosure with reference to FIGS. 8A, a description of the same components as those of the electronic device 600 of FIGS. 6A and 6B may be omitted.

Referring to FIG. 8A, the electronic device 700 according to various embodiments of the disclosure may include a display (DP) and an image sensor 710 (e.g., the camera modules 105, 112, and 113 in FIG. 3A or the camera module 1080 in FIG. 4). The display (DP) may include a display panel 720, a polarizing layer 730, a first optical compensation film 740 (OCF1), window glass 750 (e.g., ultra-thin tempered glass (UTG) or a polymer window), and a second optical compensation film 760 (OCF2). The first optical compensation film 740 (OCF1) and the second optical compensation film 760 (OCF2) may be disposed to correspond to the entire surface of the polarizing layer 730 and the window glass 750. FIG. 8A illustrates an example in which one sheet of window glass 750 is disposed. Without being limited thereto, multiple sheets of window glass may be disposed. As the multiple sheets of window glass, ultra-thin glass (UTG) or polymer windows may be applied.

The image sensor 710 may be disposed under the display panel 720 in an under-display camera (UDC) type. One image sensor 710 may be disposed under the display panel 720. Without being limited thereto, a plurality of image sensors 710 may be disposed under the display panel 720. Since pixels are also arranged in the under-display camera area in which the image sensor 710 is disposed, an image may be displayed in the under-display camera area.

The polarizing layer 730 may be disposed on the display panel 720. The first optical compensation film 740 (OCF1) may be disposed on the polarizing layer 730. The window glass 750 may be disposed on the first optical compensation film 740 (OCF1). The second optical compensation film 760 (OCF2) may be disposed on the window glass 750.

The electronic device 700 may be a foldable phone. Since it is necessary to apply a foldable display (DP) to the foldable phone, the first optical compensation film 740 (OCF1) and the second optical compensation film 760 (OCF2) may have a thin thickness. As an example, the first optical compensation film 740 (OCF1) may have a thickness of 20 to 100 µm. The first optical compensation film 740 (OCF1) may have a phase difference of 2,000 nm to 8,000 nm. The first optical compensation film 740 (OCF1) may have a function of a shock absorption layer. As an example, the second optical compensation film 760 (OCF2) may have a thickness of 20 to 100 µm. The second optical compensation film 760 (OCF2) may have a phase difference of 2,000 nm to 8,000 nm. The second optical compensation film 760 (OCF2) may have a function of a protective film for protecting the window glass 750 and a function of a retardation film for preventing rainbow color unevenness according to application of the polarizing layer 730.

The first optical compensation film 740 and the second optical compensation film 760 may have a protective film function or a shock absorption function in addition to the optical compensation function. Therefore, from the viewpoint of the protective film function or the shock absorption function, it is preferable for the first optical compensation film 740 and the second optical compensation film 760 to have a greater thickness. However, in the case of a foldable phone, since the folding characteristic is important, the thickness of the first optical compensation film 740 and the second optical compensation film 760 should be considered, and in this proposal, the first optical compensation film 740 and the second optical compensation film 760 may have a thickness of 20 to 100 µm. As an embodiment, since the second optical compensation film 760 disposed on the window glass 750 has a function of a protective film protecting the window glass 750, the second optical compensation film 760 may be configured to be thicker than the first optical compensation film 740.

A first adhesive member 725 may be provided between the display panel 720 and the polarizing layer 730 to bond the display panel 720 and the polarizing layer 730 to each other. A second adhesive member 735 may be provided between the polarizing layer 730 and the first optical compensation film 740 (OCF1) to bond the polarizing layer 730 and the first optical compensation film 740 (OCF1) to each other. A third adhesive member 745 may be provided between the first optical compensation film 740 (OCF1) and the window glass 750 to bond the first optical compensation film 740 (OCF1) and the window glass 750 to each other. A fourth adhesive member 755 may be provided between the window glass 750 and the second optical compensation film 760 (OCF2) to bond the window glass 750 and the second optical compensation films 760 (OCF2) to each other.

The first to fourth adhesive members 725, 735, 745, and 755 may include an optical clear adhesive (OCA), a pressure-sensitive adhesive, a heat-reactive adhesive, a general adhesive, or a double-sided tape. According to an embodiment, the display panel 720 and the polarizing layer 730 may be integrated with each other. In order to facilitate attachment/detachment of the second optical compensation film 760 disposed on the window 750, the fourth adhesive member 755 may be configured to have a lower (or weaker) adhesive strength than the first to third adhesive members 725, 735, and 745.

Since the image sensor 710 is disposed under the display panel 720 in an under-display camera (UDC) type, it is necessary to secure transmittance in consideration of the quality of a captured image. To this end, the number of pixels arranged in the under-display camera area may be reduced to 1/2, 1/3, 1/4, 1/5, or 1/6 of the number of pixels arranged in the display area (see FIG. 6D and FIG. 7B). Since a smaller number of pixels are arranged in the under-display camera area than in the display area, the display area and the under-display camera area may display different resolutions. The under-display camera area may be displayed with a lower resolution than that in the display area.

By disposing the first optical compensation film 740 (OCF1) and the second optical compensation film 760 (OCF2) on the polarizing layer 730, due to the phase difference of the first optical compensation film 740 (OCF1) and the second optical compensation film 760 (OCF2), it is possible to suppress or prevent the occurrence of rainbow color unevenness when capturing an image of a subject.

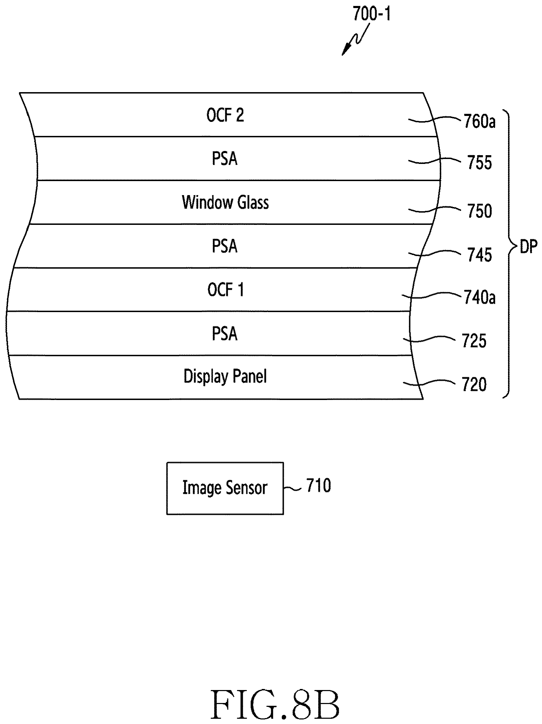

FIG. 8B is a view illustrating a display (DP) and an image sensor 710 according to various embodiments of the disclosure. In describing an electronic device 700-1 according to various embodiments of the disclosure with reference to FIG. 8B, a description of the same components as those of the electronic device 600 of FIGS. 6A, 6B, 6C, and 6D may be omitted.

Referring to FIG. 8B, the electronic device 700-1 according to various embodiments of the disclosure may include a display (DP) and an image sensor 710 (e.g., the camera modules 105, 112, and 113 in FIG. 3A or the camera module 1080 in FIG. 4). The display (DP) may include a display panel 720, a first optical compensation film 740a (OCF1), window glass 750 (e.g., ultra-thin tempered glass (UTG) or a polymer window), and a second optical compensation film 760a (OCF2). The first optical compensation film 740a (OCF1) may be disposed to correspond to the entire surface of the display panel 720. The second optical compensation film 760a (OCF2) may be disposed to correspond to the entire surface of the window glass 750. FIG. 8B illustrates an example in which one sheet of window glass 750 is disposed. Without being limited thereto, multiple sheets of window glass may be disposed. As the multiple sheets of window glass, ultra-thin glass (UTG) or polymer windows may be applied.

According to an embodiment, the display panel 720 and the polarizing layer may be integrated with each other. According to an embodiment, when a color filter formed of red (R), green (G), and blue (B) pigments and having a polarizing function is disposed on each of the pixels of the display panel 720, the polarizing layer may be omitted. Even when a color filter having a polarization function is applied, one or more optical compensation films 740a and 760a may be disposed.

The image sensor 710 may be disposed under the display panel 720 in an under-display camera (UDC) type. One image sensor 710 may be disposed under the display panel 720. Without being limited thereto, a plurality of image sensors 710 may be disposed under the display panel 720. Since pixels are also arranged in the under-display camera area in which the image sensor 710 is disposed, an image may be displayed in the under-display camera area.

The first optical compensation film 740a (OCF1) may be disposed on the display panel 720. The window glass 750 may be disposed on the first optical compensation film 740a (OCF1). The second optical compensation film 760a (OCF2) may be disposed on the window glass 750.

The electronic device 700-1 may be a foldable phone. Since it is necessary to apply a foldable display (DP) to the foldable phone, the first optical compensation film 740a (OCF1) and the second optical compensation film 760a (OCF2) may have a thin thickness. As an example, the first optical compensation film 740a (OCF1) may have a thickness of 20 to 100 µm. The first optical compensation film 740a (OCF1) may have a phase difference of 2,000 nm to 8,000 nm. The first optical compensation film 740 (OCF1) may have a function of a shock absorption layer and a function of a retardation film for preventing rainbow color unevenness. As an example, the second optical compensation film 760a (OCF2) may have a thickness of 20 to 100 µm. The second optical compensation film 760a (OCF2) may have a phase difference of 2,000 nm to 8,000 nm. The second optical compensation film 760a (OCF2) may have a function of a protective film for protecting the window glass 750 and a function of a retardation film for preventing rainbow color unevenness.

Since the image sensor 710 is disposed under the display panel 720 in an under-display camera (UDC) type, it is necessary to secure transmittance in consideration of the quality of a captured image. To this end, the number of pixels arranged in the under-display camera area may be reduced to 1/2, 1/3, 1/4, 1/5, or 1/6 of the number of pixels arranged in the display area (see FIG. 6B and FIG. 7B). Since a smaller number of pixels are arranged in the under-display camera area than in the display area, the display area and the under-display camera area may display different resolutions. The under-display camera area may be displayed with a lower resolution than that in the display area.

By disposing the first optical compensation film 740a (OCF1) and the second optical compensation film 760a (OCF2) on the display panel 720, due to the phase difference of the first optical compensation film 740a (OCF1) and the second optical compensation film 760a (OCF2), it is possible to suppress or prevent the occurrence of rainbow color unevenness when capturing an image of a subject.

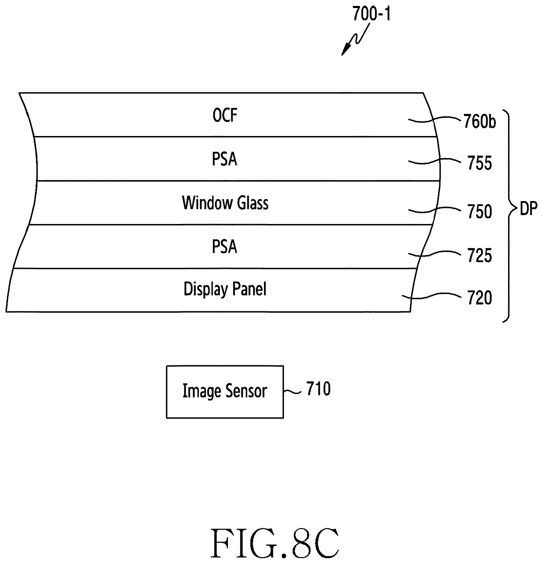

FIG. 8C is a view illustrating a display (DP) and an image sensor 710 according to various embodiments of the disclosure. In describing an electronic device 700-2 according to various embodiments of the disclosure with reference to FIG. 8C, a description of the same components as those of the electronic device 600 of FIGS. 6A, 6B, 6C, and 6D may be omitted.

Referring to FIG. 8C, the electronic device 700-2 according to various embodiments of the disclosure may include a display (DP) and an image sensor 710 (e.g., the camera modules 105, 112, and 113 in FIG. 3A or the camera module 1080 in FIG. 4). The display (DP) may include a display panel 720, window glass 750 (e.g., ultra-thin tempered glass (UTG) or a polymer window), and an optical compensation film 760b (OCF). The optical compensation film 760b (OCF) may be disposed to correspond to the entire surface of the window glass 750. FIG. 8C illustrates an example in which one sheet of window glass 750 is disposed. Without being limited thereto, multiple sheets of window glass may be disposed. As the multiple sheets of window glass, ultra-thin glass (UTG) or polymer windows may be applied.

According to an embodiment, the display panel 720 and the polarizing layer may be integrated with each other. According to an embodiment, when a color filter formed of red (R), green (G), and blue (B) pigments and having a polarizing function is disposed on each of the pixels of the display panel 720, the polarizing layer may be omitted. Even when the color filter having a polarizing function is applied, the optical compensation film 760b may be disposed on the window glass 750.

The image sensor 710 may be disposed under the display panel 720 in an under-display camera (UDC) type. One image sensor 710 may be disposed under the display panel 720. Without being limited thereto, a plurality of image sensors 710 may be disposed under the display panel 720. Since pixels are also arranged in the under-display camera area in which the image sensor 710 is disposed, an image may be displayed in the under-display camera area. The window glass 750 may be disposed on the display panel 720. The optical compensation film 760b (OCF) may be disposed on the window glass 750.

The electronic device 700-1 may be a foldable phone. Since it is necessary to apply a foldable display (DP) to the foldable phone, the optical compensation film 760b (OCF) may have a thin thickness. As an example, the optical compensation film 760b (OCF) may have a thickness of 20 to 100 µm. The optical compensation film 760b (OCF) may have a phase difference of 2,000 to 8,000 nm. The optical compensation film 760b (OCF) may have a function of a protective film for protecting the window glass 750 and a function of a retardation film for preventing rainbow color unevenness.

Since the image sensor 710 is disposed under the display panel 720 in an under-display camera (UDC) type, it is necessary to secure transmittance in consideration of the quality of a captured image. To this end, the number of pixels arranged in the under-display camera area may be reduced to 1/2, 1/3, 1/4, 1/5, or 1/6 of the number of pixels arranged in the display area (see FIG. 6B and FIG. 7B). Since a smaller number of pixels are arranged in the under-display camera area than in the display area, the display area and the under-display camera area may display different resolutions. The under-display camera area may be displayed with a lower resolution than that in the display area.

By disposing the optical compensation film 760b (OCF) on the display panel 720 and the window glass 750, due to the phase difference of the optical compensation film 760b (OCF), it is possible to suppress or prevent the occurrence of rainbow color unevenness when capturing an image of a subject.

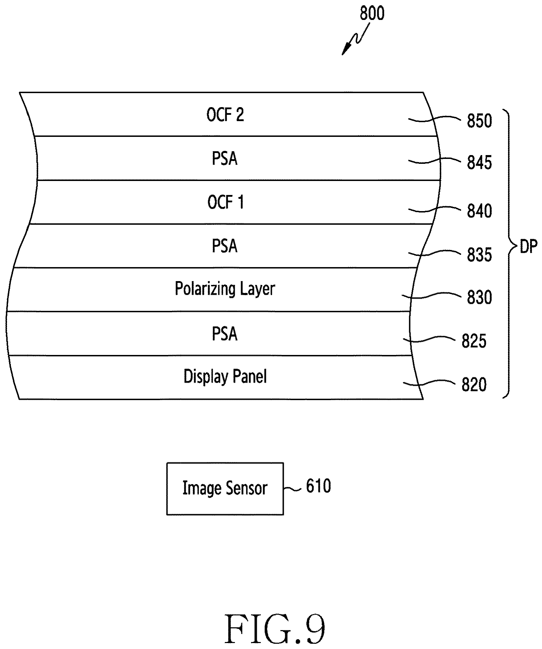

FIG. 9 is a view illustrating a display (DP) and an image sensor 810 according to various embodiments of the disclosure. In describing an electronic device 800 according to various embodiments of the disclosure with reference to FIG. 9, a description of the same components as those of the electronic device 600 of FIGS. 6A, 6B, 6C, and 6D may be omitted.

Referring to FIG. 9, the electronic device 800 according to various embodiments of the disclosure may include a display (DP) and an image sensor 810 (e.g., the camera modules 105, 112, and 113 in FIG. 3A or the camera module 1080 in FIG. 4). The display (DP) may include a display panel 820, a polarizing layer 830, a first optical compensation film 840 (OCF1), and a second optical compensation film 850 (OCF2). The first optical compensation film 840 (OCF1) and the second optical compensation film 850 (OCF2) may be disposed to correspond to the entire surface of the polarizing layer 830.

The image sensor 810 may be disposed under the display panel 820 in an under-display camera (UDC) type. One image sensor 810 may be disposed under the display panel 820. Without being limited thereto, a plurality of image sensors 810 may be disposed under the display panel 820. Since pixels are also arranged in the under-display camera area in which the image sensor 810 is disposed, an image may be displayed in the under-display camera area.

The polarizing layer 830 may be disposed on the display panel 820. The first optical compensation film 840 (OCF1) may be disposed on the polarizing layer 830. The second optical compensation film 850 (OCF2) may be disposed on the first optical compensation film 840 (OCF1). In this way, the first optical compensation film 840 (OCF1) and the second optical compensation film 850 (OCF2) may be disposed in a double structure.

The electronic device 800 may be a foldable phone. Since it is necessary to apply a foldable display (DP) to the foldable phone, the first optical compensation film 840 (OCF1) and the second optical compensation film 850 (OCF2) may have a thin thickness. As an example, the first optical compensation film 840 (OCF1) may have a thickness of 20 to 100 µm. The first optical compensation film 840 (OCF1) may have a phase difference of 2,000 nm to 8,000 nm. The first optical compensation film 840 (OCF1) may have a function of a shock absorption layer. As an example, the second optical compensation film 850 (OCF2) may have a thickness of 20 to 100 µm. The second optical compensation film 850 (OCF2) may have a phase difference of 2,000 nm to 8,000 nm. The second optical compensation film 850 (OCF2) may have a function of a protective film and a function of a retardation film for preventing rainbow color unevenness according to application of the polarizing layer 830. In an embodiment, the first optical compensation film 840 (OCF1) and the second optical compensation film 850 (OCF2) may have the same thickness. As an embodiment, the first optical compensation film 840 (OCF1) may have a window function, and the second optical compensation film 850 (OCF2) may have a protective film function. The first optical compensation film 840 (OCF1) and the second optical compensation film 850 (OCF2) may have different thicknesses.

A first adhesive member 825 may be provided between the display panel 820 and the polarizing layer 830 to bond the display panel 820 and the polarizing layer 830 to each other. A second adhesive member 835 may be provided between the polarizing layer 830 and the first optical compensation film 840 (OCF1) to bond the polarizing layer 830 and the first optical compensation film 840 (OCF1) to each other. A third adhesive member 845 may be provided between the first optical compensation film 840 (OCF1) and the second optical compensation film 850 (OCF2) to bond the first optical compensation film 840 (OCF1) and the second optical compensation film 850 (OCF2) to each other. In order to facilitate attachment/detachment of the second optical compensation film 850, the third adhesive member 845 may be configured to have a lower (or weaker) strength than the first adhesive member 825 and the second adhesive member 835.

The first to third adhesive members 825, 835, and 845 may include an optical clear adhesive (OCA), a pressure-sensitive adhesive (PSA), a heat-reactive adhesive, a general adhesive, or a double-sided tape. According to an embodiment, the display panel 820 and the polarizing layer 830 may be integrated with each other.

Since the image sensor 810 is disposed under the display panel 820 in an under-display camera (UDC) type, it is necessary to secure transmittance in consideration of the quality of a captured image. To this end, the number of pixels arranged in the under-display camera area may be reduced to 1/2, 1/3, 1/4, 1/5, or 1/6 of the number of pixels arranged in the display area (see FIG. 6B and FIG. 7B). Since a smaller number of pixels are arranged in the under-display camera area than in the display area, the display area and the under-display camera area may display different resolutions. The under-display camera area may be displayed with a lower resolution than that in the display area.

By disposing the first optical compensation film 840 (OCF1) and the second optical compensation film 850 (OCF2) on the polarizing layer 830, due to the phase difference of the first optical compensation film 840 (OCF1) and the second optical compensation film 850 (OCF2), it is possible to suppress or prevent the occurrence of rainbow color unevenness when capturing an image of a subject.

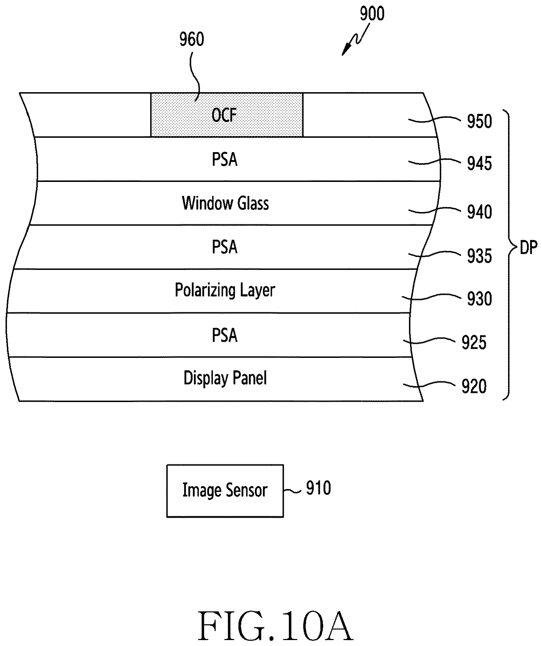

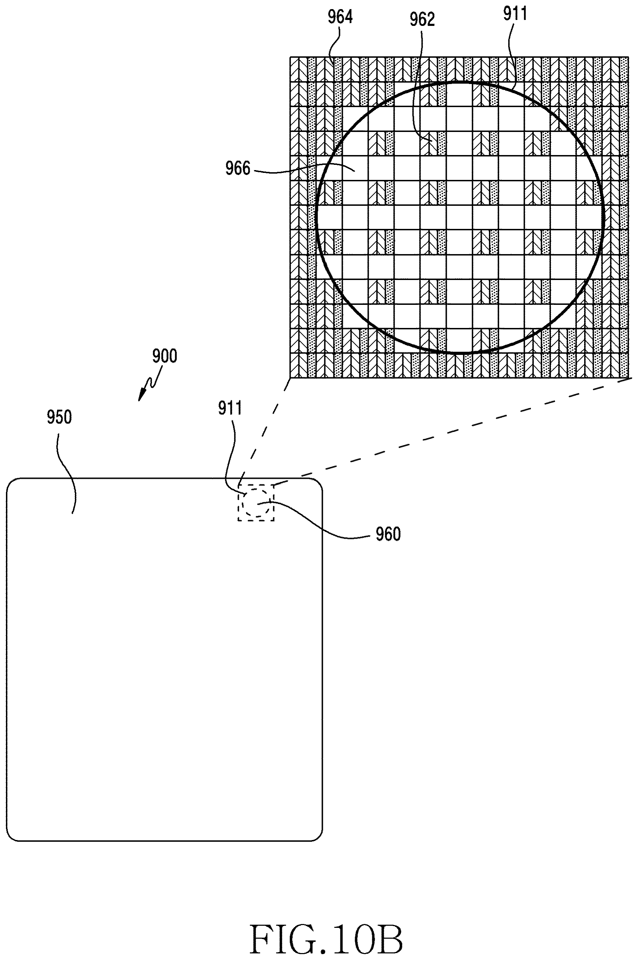

FIG. 10A is a view illustrating a display (DP) and an image sensor 910 according to various embodiments of the disclosure. FIG. 10B is a plan view illustrating a shape of an optical compensation film (OCF) disposed on an under-display camera (UDC) area according to various embodiments of the disclosure. In describing an electronic device 900 according to various embodiments of the disclosure with reference to FIGS. 10A and 10B, a description of the same components as those of the electronic device 600 of FIGS. 6A, 6B, 6C, and 6D may be omitted.

Referring to FIGS. 10A and 10B, the electronic device 900 according to various embodiments of the disclosure may include a display (DP) and an image sensor 910 (e.g., the camera modules 105, 112, and 113 in FIG. 3A or the camera module 1080 in FIG. 4). The display (DP) may include a display panel 920, a polarizing layer 930, window glass 940 (e.g., ultra-thin tempered glass (UTG) or a polymer window), a protective film 950, and an optical compensation film 960 (OCF). FIG. 10A illustrates an example in which one sheet of window glass 940 is disposed. Without being limited thereto, multiple sheets of window glass may be disposed. As the multiple sheets of window glass, ultra-thin glass (UTG) or polymer windows may be applied.

The protective film 950 may be disposed to correspond to the entire surface of the window glass 940 except for the under-display camera area 911. The optical compensation film 960 (OCF) may be disposed to correspond to the under-display camera area 911.

As an example, when manufacturing the electronic device 900, the optical compensation film 960 (OCF) may be fabricated in a shape corresponding to the under-display camera area 911. A hole may be provided in a portion corresponding to the under-display camera area 911 in the entire surface of the protective film 950, and the optical compensation film 960 (OCF) may be inserted into the hole. The protective film 950 and the optical compensation film 960 (OCF) may be fabricated to have the same thickness such that a step is not felt when a user touches the under-display camera area 911. The protective film 950 and the optical compensation film 960 (OCF) may be arranged side by side in the horizontal direction. As an embodiment, the optical compensation film 960 (OCF) may be configured to have a size corresponding to that of the image sensor 910 (or a camera module). As an embodiment, the optical compensation film 960 (OCF) may be formed to have a larger size than the under-display camera area 911 in consideration of the angle of view of the image sensor 910 or camera module.

The image sensor 910 may be disposed under the display panel 920 in an under-display camera (UDC) type. One image sensor 910 may be disposed under the display panel 920. Without being limited thereto, a plurality of image sensors 910 may be disposed under the display panel 920. Since pixels are also arranged in the under-display camera area in which the image sensor 910 is disposed, an image may be displayed in the under-display camera area. FIG. 10B illustrates an example in which the under-display camera area 911 is disposed at the top right side of the electronic device 900. Without being limited thereto, the under-display camera area 911 may be disposed at the top center, top left side, center, center right side, center left side, bottom right side, bottom center, bottom left side, or the like of the electronic device 900 without being limited in position.

The polarizing layer 930 may be disposed on the display panel 920. The window glass 940 may be disposed on the polarizing layer 930. The protective film 950 and the optical compensation film 960 (OCF2) may be disposed on the window glass 940.

The electronic device 900 may be a foldable phone. Since it is necessary to apply a foldable display (DP) to the foldable phone, the protective film 950 and the optical compensation film 960 (OCF) may have a thin thickness. As an example, the protective film 950 and the optical compensation film 960 (OCF) may have a thickness of 20 to 100 µm. The optical compensation film 960 (OCF) may have a phase difference of 2,000 to 8,000 nm. The optical compensation film 960 (OCF) may have a function of a protective film for protecting the window glass 940 and a function of a retardation film for preventing rainbow color unevenness according to application of the polarizing layer 930.

A first adhesive member 925 may be provided between the display panel 920 and the polarizing layer 930 to bond the display panel 920 and the polarizing layer 930 to each other. A second adhesive member 935 may be provided between the polarizing layer 930 and the window glass 940 to bond the polarizing layer 930 and the window glass 940 to each other. A third adhesive member 945 may be provided between the window glass 940 and the protective film 950 and between the window glass 940 and the optical compensation film 960 (OCF) to bond the window glass 940 and the protective film 950 and the optical compensation film 960 (OCF) to each other. In order to facilitate attachment/detachment of the second optical compensation film 960 disposed on the window glass 940, the third adhesive member 945 may be configured to have a lower (or weaker) adhesive strength than those of the first adhesive member 925 and the second adhesive member 935.

The first to third adhesive members 925, 935, and 935 may include an optical clear adhesive (OCA), a pressure-sensitive adhesive (PSA), a heat-reactive adhesive, a general adhesive, or a double-sided tape. According to an embodiment, the display panel 920 and the polarizing layer 930 may be integrated with each other.

Since the image sensor 910 is disposed under the display panel 920 in an under-display camera (UDC) type, it is necessary to secure transmittance in consideration of the quality of a captured image. To this end, the number of pixels arranged in the under-display camera area may be reduced to 1/2, 1/3, 1/4, 1/5, or 1/6 of the number of pixels arranged in the display area (see FIG. 6B and FIG. 7B). Since a smaller number of pixels are arranged in the under-display camera area than in the display area, the display area and the under-display camera area may display different resolutions. The under-display camera area may be displayed with a lower resolution than that in the display area.

By disposing the optical compensation film 960 (OCF) on the polarizing layer 930 corresponding to the under-display camera area, due to the phase difference of the optical compensation film 960 (OCF), it is possible to suppress or prevent the occurrence of rainbow color unevenness when capturing an image of a subject.

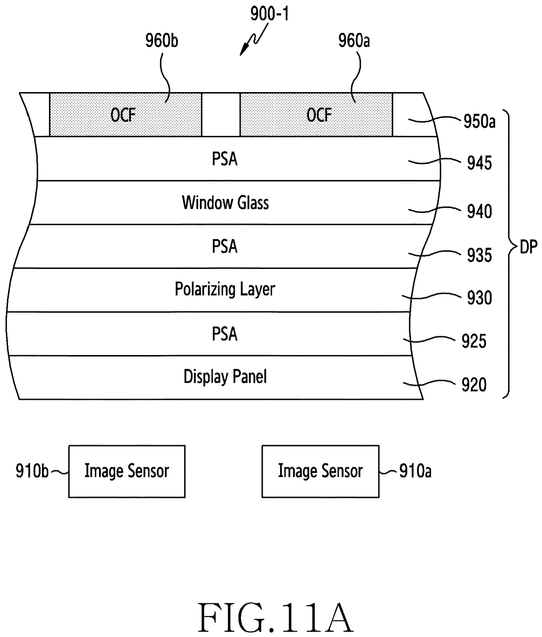

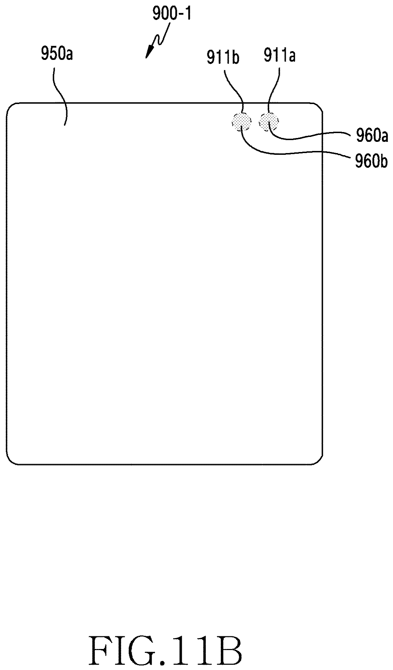

FIG. 11A is a view illustrating a display and image sensors according to various embodiments of the disclosure. FIG. 11B is a plan view illustrating a shape of an optical compensation film (OCF) disposed on an under-display camera (UDC) area according to various embodiments of the disclosure.

In describing an electronic device 900-1 according to various embodiments of the disclosure with reference to FIGS. 11A and 11B, a description of the same components as those of the electronic device 900 of FIGS. 10 and 11 may be omitted. In the description, a description of the same components as those of the electronic device 600 of FIGS. 6A 6B, 6C and 6D may be omitted.

Referring to FIGS. 11A and 11B, the electronic device 900-1 according to various embodiments of the disclosure may include a display (DP) and a plurality of image sensors 910a and 910b (e.g., the camera modules 105, 112, and 113 in FIG. 3A or the camera module 1080 in FIG. 4).

The display (DP) may include a display panel 920, a polarizing layer 930, window glass 940 (e.g., ultra-thin tempered glass (UTG) or a polymer window), a protective film 950a, a first optical compensation film 960a (OCF1), and a second optical compensation film 960b (OCF2). FIG. 11A illustrates an example in which one sheet of window glass 940 is disposed. Without being limited thereto, multiple sheets of window glass may be disposed. As the multiple sheets of window glass, ultra-thin glass (UTG) or polymer windows may be applied.

The protective film 950a may be disposed to correspond to the entire surface of the window glass 940 except for the first and second under-display camera areas 911a and 911b. The first optical compensation film 960a (OCF1) may be disposed to correspond to the first under-display camera area 911a. The second optical compensation film 960b (OCF1) may be disposed to correspond to the second under-display camera area 911b.

As an example, when manufacturing the electronic device 900-1, it is possible to fabricate the first and second optical compensation films 960a and 960b in shapes corresponding to the first and second under-display camera areas 911a and 911b. Holes may be provided in portions corresponding to the first and second under-display camera areas 911a and 911b in the entire surface of the protective film 950a, and the first and second optical compensation films 960a and 960b may be inserted into the holes. The protective film 950 and the first and second optical compensation films 960a and 960b may be fabricated to have the same thickness such that a step is not felt when a user touches the first and second under-display camera areas 911a and 911b.

The first image sensor 910a and the second image sensor 960b may be disposed under the display panel 920 in an under-display camera (UDC) type. Since pixels are also arranged in the first and second under-display camera areas 911a and 911b in which the first and second image sensors 910a and 910b are arranged, an image may be displayed in the first and second under-display camera areas. FIG. 11B illustrates an example in which the first and second under-display areas 911a and 911b are disposed at the top right side of the electronic device 900-1. Without being limited thereto, the first and second under-display camera areas 911a and 911b may be disposed at the top center, top left side, center, center left side, center right side, bottom right side, bottom center, bottom left side, or the like of the electronic device 900-1 without being limited in position.

The electronic device 900-1 may be a foldable phone. Since it is necessary to apply a foldable display (DP) to the foldable phone, the protective film 950a and the first and second optical compensation films 960a and 960b may have a thin thickness. As an example, the protective film 950a and the first and second optical compensation films 960a and 960b may have a thickness of 20 to 100 µm. The first and second optical compensation film 960a and 960b may have a phase difference of 2,000 nm to 8,000 nm. The first and second optical compensation films 960a and 960b may have a function of a protective film for protecting the window glass 940 and a function of a retardation film for preventing rainbow color unevenness according to application of the polarizing layer 930.

A first adhesive member 925 may be provided between the display panel 920 and the polarizing layer 930 to bond the display panel 920 and the polarizing layer 930 to each other. A second adhesive member 935 may be provided between the polarizing layer 930 and the window glass 940 to bond the polarizing layer 930 and the window glass 940 to each other. A third adhesive member 945 may be provided between the window glass 940 and the protective film 950 to bond the window glass 940 and the protective film 950 to each other. In addition, a third adhesive member 945 may also be provided between the window glass 940 and the first and second optical compensation film 960a and 960b to bond the window glass 940 and the first and second optical compensation films 960a and 960b to each other. In order to facilitate attachment/detachment of the first and second optical compensation films 960a and 960b disposed on the window glass 940, the third adhesive member 945 may be configured to have a lower (or weaker) adhesive strength than those of the first adhesive member 925 and the second adhesive member 935.

The first to third adhesive members 925, 935, and 945 may include an optical clear adhesive (OCA), a pressure-sensitive adhesive (PSA), a heat-reactive adhesive, a general adhesive, or a double-sided tape. According to an embodiment, the display panel 920 and the polarizing layer 930 may be integrated with each other.

Since the first and second image sensor 910a and 960b are disposed under the display panel 920 in the under-display camera (UDC) type, it is necessary to secure transmittance in consideration of the quality of a captured image. To this end, the number of pixels arranged in the first and second under-display camera areas 911a and 911b may be reduced to 1/2, 1/3, 1/4, 1/5, or 1/6 of the number of pixels arranged in the display area (see FIG. 6B and FIG. 7B). Since a smaller number of pixels are arranged in the first and second under-display camera areas 911a and 911b than in the display area, the display area and the first and second under-display camera areas 911a and 911b may display different resolutions. The resolution displayed in the first and second under-display camera areas 911a and 911b may be lower than the resolution displayed in the display area.

By disposing the first and second optical compensation films 960a and 960b on the polarizing layer 930 corresponding to the first and second under-display camera regions 911a and 911b, due to the phase difference of the first and second optical compensation films 960a and 960b, it is possible to suppress or prevent the occurrence of rainbow color unevenness when capturing an image of a subject.

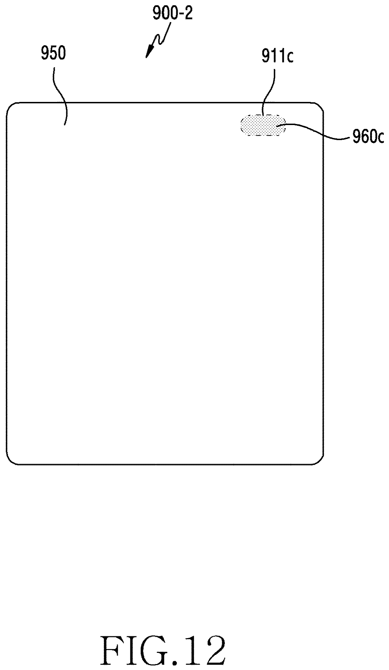

FIG. 12 is a plan view illustrating a shape of an optical compensation film (OCF) disposed on an under-display camera (UDC) area according to various embodiments of the disclosure.

Referring to FIG. 12, an under-display camera area 911c may be fabricated in an oval shape elongated in a first direction (e.g., the horizontal direction). The protective film 950 may be disposed to correspond to the front surface except for the under-display camera area 911c. The optical compensation film 960c may be disposed to correspond to the under-display camera area 911c.

As an example, the components of the electronic device 900-2 except for the protective film 950 and the optical compensation film 960c may be the same as those of the electronic device 900 described with reference to FIGS. 10A and 10B. As an example, the components of the electronic device 900-2 except for the protective film 950 and the optical compensation film 960c may be the same as those of the electronic device 900-1 described with reference to FIGS. 11A and 11B.

As an example, when manufacturing the electronic device 900-2, the optical compensation film 960c may be fabricated in a shape corresponding to the under-display camera area 911c. A hole may be provided in a portion corresponding to the under-display camera area 911c in the entire surface of the protective film 950a, and the optical compensation film 960c may be inserted into the hole. The protective film 950 and the optical compensation film 960c may be fabricated to have the same thickness such that a step is not felt when a user touches the under-display camera area 911c.

One image sensor or a plurality of image sensors may be disposed to correspond to the under-display camera area 911c. Since pixels are also arranged in the under-display camera area 911c in which an image sensor is disposed, an image may be displayed in the under-display camera area. FIG. 12 illustrates an example in which the under-display camera area 911c is disposed at the top right side of the electronic device 900-2. Without being limited thereto, the under-display camera area 911c may be disposed at the top center, top left side, center, center right side, center left side, bottom right side, bottom center, bottom left side, or the like of the electronic device 900-2 without being limited in position.

The electronic device 900-2 may be a foldable phone. Since it is necessary to apply a foldable display (DP) to the foldable phone, the protective film 950 and the optical compensation film 960c may have a thin thickness. As an example, the protective film 950 and the optical compensation film 960c may have a thickness of 20 to 100 µm. The optical compensation film 960c may have a phase difference of 2,000 to 8,000 nm. The optical compensation film 960c may have a function of a protective film for protecting window glass and a function of a retardation film for preventing rainbow color unevenness according to application of the polarizing layer.

The number of pixels arranged in the under-display camera area 911c may be reduced to 1/2, 1/3, 1/4, 1/5, or 1/6 of the number of pixels arranged in the display area (see FIG. 6B and FIG. 7B). Since a smaller number of pixels are arranged in the under-display camera area 911c than in the display area, the display area and the under-display camera area 911c may display different resolutions. The under-display camera area 911c may be displayed with a lower resolution than that in the display area.

By disposing the optical compensation film 960c on the under-display camera area 911c, due to the phase difference of the optical compensation film 960c, it is possible to suppress or prevent the occurrence of rainbow color unevenness when capturing an image of a subject.

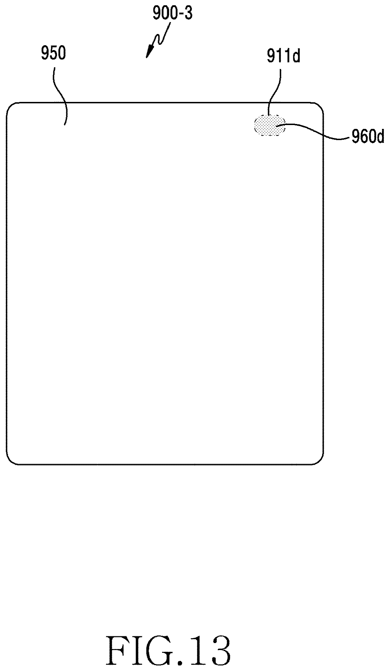

FIG. 13 is a plan view illustrating a shape of an optical compensation film (OCF) disposed on an under-display camera (UDC) area according to various embodiments of the disclosure.

Referring to FIG. 13, the under-display camera area 911d may be fabricated in a polygonal shape. The protective film 950 may be disposed to correspond to the front surface except for the under-display camera area 911d. The optical compensation film 960d may be disposed to correspond to the under-display camera area 911d.

As an example, the components of the electronic device 900-3 except for the protective film 950 and the optical compensation film 960d may be the same as those of the electronic device 900 described with reference to FIGS. 10A and 10B. As an example, the components of the electronic device 900-3 except for the protective film 950 and the optical compensation film 960d may be the same as those of the electronic device 900-1 described with reference to FIGS. 11A and 11B.

As an example, when manufacturing the electronic device 900-3, the optical compensation film 960d may be fabricated in a shape corresponding to the under-display camera area 911d. A hole may be provided in a portion corresponding to the under-display camera area 911d in the entire surface of the protective film 950, and the optical compensation film 960d may be inserted into the hole. The protective film 950 and the optical compensation film 960d may be fabricated to have the same thickness such that a step is not felt when a user touches the under-display camera area 911d. Since pixels are also arranged in the under-display camera area 911c in which an image sensor is disposed, an image may be displayed in the under-display camera area. FIG. 13 illustrates an example in which the under-display camera area 911d is disposed at the top right side of the electronic device 900-3. Without being limited thereto, the under-display camera area 911d may be disposed at the top center, top left side, center, center right side, center left side, bottom right side, bottom center, bottom left side, or the like of the electronic device 900-3 without being limited in position.

The electronic device 900-3 may be a foldable phone. Since it is necessary to apply a foldable display (DP) to the foldable phone, the protective film 950 and the optical compensation film 960d may have a thin thickness. As an example, the protective film 950 and the optical compensation film 960d may have a thickness of 20 to 100 µm. The optical compensation film 960d may have a phase difference of 2,000 to 8,000 nm. The optical compensation film 960d may have a function of a protective film for protecting window glass and a function of a retardation film for preventing rainbow color unevenness according to application of the polarizing layer.

The number of pixels arranged in the under-display camera area 911c may be reduced to 1/2, 1/3, 1/4, 1/5, or 1/6 of the number of pixels arranged in the display area (see FIG. 6B and FIG. 7B). Since a smaller number of pixels are arranged in the under-display camera area 911d than in the display area, the display area and the under-display camera area 911d may display different resolutions. The under-display camera area 911d may be displayed with a lower resolution than that in the display area.

By disposing the optical compensation film 960d on the under-display camera area 911d, due to the phase difference of the optical compensation film 960d, it is possible to suppress or prevent the occurrence of rainbow color unevenness when capturing an image of a subject.

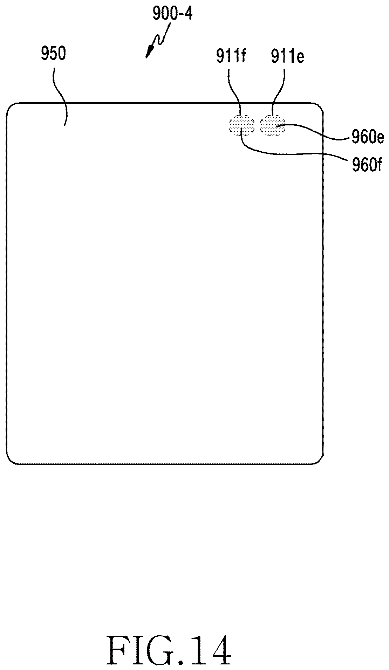

FIG. 14 is a plan view illustrating a shape of an optical compensation film (OCF) disposed on an under-display camera (UDC) area according to various embodiments of the disclosure.

Referring to FIG. 14, a first under-display camera area 911e and a second under-display camera area 911f may be disposed on the front surface (e.g., the surface on which a screen is displayed) of the electronic device 900-4. The first under-display camera area 911e and the second under-display camera area 911f may be fabricated in a polygonal shape. The protective film 950 may be disposed to correspond to the front surface except for the first and second under-display camera areas 911e and 911f. The first optical compensation film 960e may be disposed to correspond to the first under-display camera area 911e. The second optical compensation film 960f may be disposed to correspond to the second under-display camera area 911f.

As an example, the components of the electronic device 900-4 except for the protective film 950 and the first and second optical compensation films 960e and 960f may be the same as those of the electronic device 900 described with reference to FIGS. 10A and 10B. As an example, the components of the electronic device 900-4 except for the protective film 950 and the first and second optical compensation films 960e and 960f may be the same as those of the electronic device 900-1 described with reference to FIGS. 11A and 11B.

As an example, when manufacturing the electronic device 900-4, the first optical compensation film 960e may be fabricated in a shape corresponding to the first under-display camera area 911e. The second optical compensation film 960f may be fabricated in a shape corresponding to the second under-display camera area 911f. A plurality of holes may be provided in portions corresponding to the first and second under-display camera areas 911e and 911f in the entire surface of the protective film 950, and a first optical compensation film 960e and a second optical compensation film 960f may be inserted into the plurality of holes, respectively. The protective film 950 and the first and second optical compensation films 960e and 960f may be fabricated to have the same thickness such that a step is not felt when a user touches the first and second under-display camera areas 911e and 911f. Since pixels are also arranged in the first and second under-display camera areas 911e and 911f in which an image sensor is disposed, an image may be displayed in the first and second under-display camera areas.

The electronic device 900-4 may be a foldable phone. Since it is necessary to apply a foldable display (DP) to the foldable phone, the protective film 950 and the first and second optical compensation films 960e and 960f may have a thin thickness. As an example, the protective film 950 and the first and second optical compensation films 960e and 960f may have a thickness of 20 to 100 µm. The first and second optical compensation film 960e and 960f may have a phase difference of 2,000 nm to 8,000 nm. The first and second optical compensation films 960e and 960f may have a function of a protective film for protecting window glass and a function of a retardation film for preventing rainbow color unevenness according to application of the polarizing layer.

The number of pixels arranged in the first and second under-display camera areas 911e and 911f may be reduced to 1/2, 1/3, 1/4, 1/5, or 1/6 of the number of pixels arranged in the display area (see FIG. 6B and FIG. 7B). Since a smaller number of pixels are arranged in the first and second under-display camera areas 911e and 911f than in the display area, the display area and the first and second under-display camera areas 911e and 911f may display different resolutions. The resolution displayed in the first and second under-display camera areas 911e and 911f may be lower than the resolution displayed in the display area.

By disposing the first and second optical compensation films 960e and 960f on the first and second under-display camera areas 911e and 911f, due to the phase difference of the first and second optical compensation films 960e and 960f, it is possible to improve or prevent the occurrence of rainbow color unevenness when capturing an image of a subject. FIG. 14 illustrates an example in which the first and second under-display areas 911e and 911f are disposed at the top right side of the electronic device 900-4. Without being limited thereto, the first and second under-display camera areas 911e and 911f may be disposed at the top center, top left side, center, center left side, center right side, bottom right side, bottom center, bottom left side, or the like of the electronic device 900-4 without being limited in position.

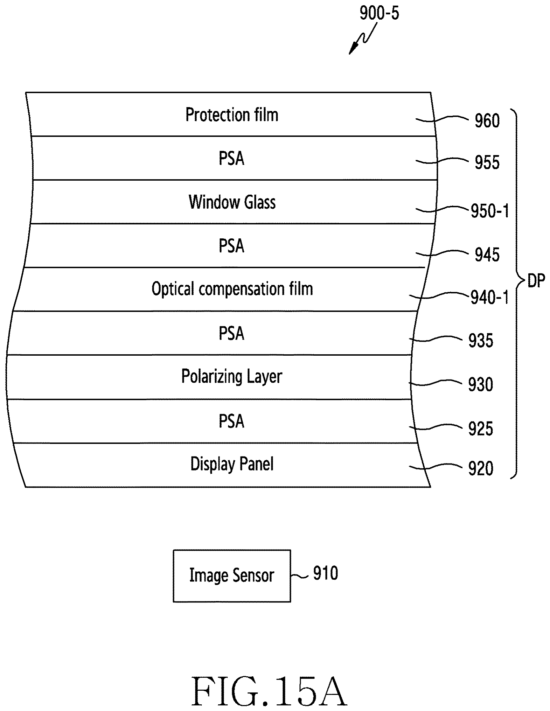

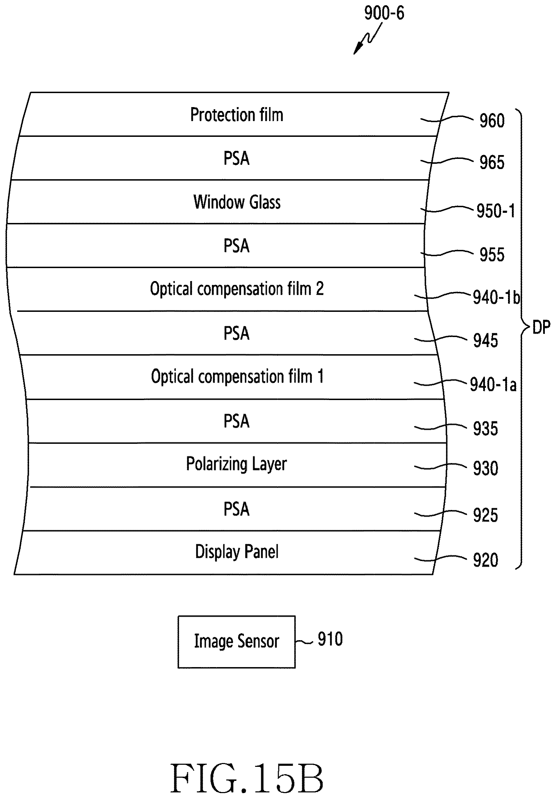

FIGS. 15A and 15B are views illustrating a display and an image sensor 910 according to various embodiments of the disclosure. In describing an electronic device 900-5 or 900-6 according to various embodiments of the disclosure with reference to FIGS. 15A and 15B, a description of the same components as those of the electronic device 600 of FIGS. 6A and 6B may be omitted.

Referring to FIG. 15A, the electronic device 900-5 according to various embodiments of the disclosure may include a display (DP) and an image sensor 910 (e.g., the camera modules 105, 112, and 113 in FIG. 3A or the camera module 1080 in FIG. 4). The display (DP) may include a display panel 920, a polarizing layer 930, an optical compensation film 940-1 (OCF), window glass 950-1 (e.g., ultra-thin tempered glass (UTG) or a polymer window), and a protective film 960. FIG. 15A illustrates an example in which one sheet of window glass 950-1 is disposed. Without being limited thereto, multiple sheets of window glass may be disposed. As the multiple sheets of window glass, ultra-thin glass (UTG) or polymer windows may be applied.

The image sensor 910 may be disposed under the display panel 920 in an under-display camera (UDC) type. One image sensor 910 may be disposed under the display panel 920. Without being limited thereto, a plurality of image sensors 910 may be disposed under the display panel 920. Since pixels are also arranged in the under-display camera area in which the image sensor 910 is disposed, an image may be displayed in the under-display camera area.

The polarizing layer 930 may be disposed on the display panel 920. The optical compensation film 940-1 may be disposed on the polarizing layer 930. The window glass 950-1 may be disposed on the optical compensation film 940-1. That is, the optical compensation film 940-1 may be disposed under the window glass 950-1. A protective film 960 may be disposed on the window glass 950-1.

A first adhesive member 925 may be provided between the display panel 920 and the polarizing layer 930 to bond the display panel 920 and the polarizing layer 930 to each other. A second adhesive member 935 may be provided between the polarizing layer 930 and the optical compensation film 940-1 to bond the polarizing layer 930 and the optical compensation film 940-1 to each other. A third adhesive member 945 may be provided between the optical compensation film 940-1 and the window glass 950-1 to bond the optical compensation film 940-1 and the window glass 950-1 to each other. A fourth adhesive member 955 may be provided between the window glass 950-1 and the protective film 960 to bond the window glass 950-1 and the protective film 960 to each other.

The electronic device 900-5 may be a foldable phone. Since it is necessary to apply a foldable display (DP) to the foldable phone, the protective film 960 and the optical compensation film 970 (OCF) may have a thin thickness. As an example, the optical compensation film 970 (OCF) may have a thickness of 20 to 100 µm. The optical compensation film 970 (OCF) may have a phase difference of 2,000 to 8,000 nm. The optical compensation film 970 (OCF) may have a function of absorbing a shock and a function of a retardation film for preventing rainbow color unevenness according to application of the polarizing layer 930.

Referring to FIG. 15B, the electronic device 900-6 according to various embodiments of the disclosure may include a display (DP) and an image sensor 910 (e.g., the camera modules 105, 112, and 113 in FIG. 3A or the camera module 1080 in FIG. 4). The display (DP) may include a display panel 920, a polarizing layer 930, a plurality of optical compensation films 940-1a and 940-1b, window glass 950-1 (e.g., ultra-thin tempered glass (UTG) or a polymer window), and a protective film 960. FIG. 15B illustrates an example in which one sheet of window glass 950-1 is disposed. Without being limited thereto, multiple sheets of window glass may be disposed. As the multiple sheets of window glass, ultra-thin glass (UTG) or polymer windows may be applied.

The polarizing layer 930 may be disposed on the display panel 920. A first optical compensation film 940-1a may be disposed on the polarizing layer 930. A second optical compensation film 940-1b may be disposed on the first optical compensation film 940-1a. The window glass 950-1 may be disposed on the second optical compensation film 940-1b. That is, the plurality of optical compensation films 940-1a and 940-1b may be disposed under the window glass 950-1. A protective film 960 may be disposed on the window glass 950-1. A protective film 960 may be disposed on the window glass 950-1. Here, the plurality of optical compensation films 940-1a and 940-1b may be disposed above the polarizing layer 930.

As an embodiment, a coating layer may be applied to any one of the plurality of optical compensation films 940-1a and 940-1b. The coating layer may include at least one of a hard coating, an anti-fingerprint coating, an anti-glare coating, an anti-reflection coating, and a low-reflection coating. The coating layer may be formed by laminating a single layer or a plurality of layers.

A first adhesive member 925 may be provided between the display panel 920 and the polarizing layer 930 to bond the display panel 920 and the polarizing layer 930 to each other. A second adhesive member 935 may be provided between the polarizing layer 930 and the first optical compensation film 940-1a to bond the polarizing layer 930 and the first optical compensation film 940-1a to each other. A third adhesive member 945 may be provided between the first optical compensation film 940-1a and the second optical compensation film 940-1b to bond the first optical compensation film 940-1a and the second optical compensation film 940-1b to each other. A fourth adhesive member 955 may be provided between the second optical compensation film 940-1b and the window glass 950-1 to bond the second optical compensation film 940-1b and the window glass 950-1 to each other. A fifth adhesive member 965 may be provided between the window glass 950-1 and the protective film 960 to bond the window glass 950-1 and the protective film 960 to each other.

The image sensor 910 illustrated in FIGS. 15A and 15B may be disposed under the display panel 920 in an under-display camera (UDC) type. When the image sensor 910 is disposed in an under-display camera (UDC) type, it is necessary to secure transmittance in consideration of the quality of a captured image. To this end, the number of pixels arranged in the under-display camera area may be reduced to 1/2, 1/3, 1/4, 1/5, or 1/6 of the number of pixels arranged in the display area (see FIG. 6B and FIG. 7B). Since a smaller number of pixels are arranged in the under-display camera area than in the display area, the display area and the under-display camera area may display different resolutions. The under-display camera area may be displayed with a lower resolution than that in the display area.

By disposing one optical compensation film or a plurality of optical compensation films on the polarizing layer 930 corresponding to the under-display camera area, due to the phase difference of the optical compensation film, it is possible to suppress or prevent the occurrence of rainbow color unevenness when capturing an image of a subject.

An electronic device including an image sensor according to various embodiments of the disclosure may include a housing, a display, and one or more image sensors. The housing may include a front surface, a rear surface, and a side surface at least partially surrounding the space between the front surface and the rear surface. The display may be disposed in the inner space of the housing to be visible from exterior and may include a display area. The one or more image sensors may be disposed under the display to overlap the display area. The display may include a display panel, a polarizing layer disposed on the display panel, and an optical compensation film disposed on the polarizing layer. The optical compensation film may have a phase difference of 2,000 to 8,000 nm.

The optical compensation film of the electronic device including an image sensor according to various embodiments of the disclosure may have a thickness of 20 to 100um.

The optical compensation film of the electronic device including an image sensor according to various embodiments of the disclosure may be disposed to correspond to the entire surface of the display panel.

The display of the electronic device including the image sensor according to various embodiments of the disclosure may further include a window glass disposed on the polarizing layer.

The optical compensation film of the electronic device including an image sensor according to various embodiments of the disclosure may include a first optical compensation film disposed between the polarizing layer and the window glass, and a second optical compensation film disposed on the window glass.

The optical compensation film of the electronic device including an image sensor according to various embodiments of the disclosure may include a first optical compensation film disposed on the polarizing layer, and a second optical compensation film disposed on the first optical compensation film.

The display of the electronic device including an image sensor according to various embodiments of the disclosure may include an under-display camera area corresponding to the one or more image sensors and a display area except for the under-display camera area. A smaller number of pixels may be arranged in the under-display camera area than in the display area.

In the electronic device including an image sensor according to various embodiments of the disclosure, the display area and in the under-display camera area may display different resolutions.

An electronic device including an image sensor according to various embodiments of the disclosure may include a housing, a display, and one or more image sensors. The housing may include a front surface, a rear surface, and a side surface at least partially surrounding the space between the front surface and the rear surface. The display may be disposed in the inner space of the housing to be visible from exterior and may include a display area. The one or more image sensors may be disposed under the display to overlap the display area. The display may include a display panel, a window glass disposed on the display panel, and an optical compensation film disposed adjacent to the window glass. The optical compensation film may have a phase difference of 2,000 to 8,000 nm.

The optical compensation film of the electronic device including an image sensor according to various embodiments of the disclosure may have a thickness of 20 to 100um.

The optical compensation film of the electronic device including the image sensor according to various embodiments of the disclosure may be disposed to correspond to the entire surface of the display panel.

The optical compensation film of the electronic device including an image sensor according to various embodiments of the disclosure may include a first optical compensation film disposed between the display panel and the window glass, and a second optical compensation film disposed on the window glass.

In the electronic device including an image sensor according to various embodiments of the disclosure, the optical compensation film may be disposed under the window glass, and the electronic device may further include a protective film on the window glass.

The display of the electronic device including an image sensor according to various embodiments of the disclosure may include an under-display camera area corresponding to the one or more image sensors and a display area except for the under-display camera area. A smaller number of pixels may be arranged in the under-display camera area than in the display area.

An electronic device including an image sensor according to various embodiments of the disclosure may include a housing, a display, and one or more image sensors. The housing may include a front surface, a rear surface, and a side surface at least partially surrounding the space between the front surface and the rear surface. The display may be disposed in the inner space of the housing to be visible from exterior and may include a display area. The one or more image sensors may be disposed under the display to overlap the display area. The display may include a display panel, a polarizing layer disposed on the display panel, a window glass disposed on the polarizing layer, and a protective film and an optical compensation film which are disposed side by side in a horizontal direction on the window glass. The optical compensation film may have a phase difference of 2,000 to 8,000 nm.

The optical compensation film of the electronic device including an image sensor according to various embodiments of the disclosure may have a thickness of 20 to 100um.

The display of the electronic device including an image sensor according to various embodiments of the disclosure may include an under-display camera area corresponding to the one or more image sensors and a display area except for the under-display camera area. A smaller number of pixels may be arranged in the under-display camera area than in the display area.

The optical compensation film of the electronic device including an image sensor according to various embodiments of the disclosure may include a first optical compensation film corresponding to a first image sensor disposed in the under-display camera area, and a second optical compensation film corresponding to a second image sensor disposed in the under-display camera area.

The protective film of the electronic device including an image sensor according to various embodiments of the disclosure may include a hole provided to correspond to the under-display camera area. The optical compensation film may be inserted into the hole and disposed to correspond to the under-display camera area.

The optical compensation film of an electronic device including an image sensor according to various embodiments of the present disclosure may be formed in a circular shape, an oval shape, or a polygonal shape.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program #40) including one or more instructions that are stored in a storage medium (e.g., internal memory #36 or external memory #38) that is readable by a machine (e.g., the electronic device #01). For example, a processor (e.g., the processor #20) of the machine (e.g., the electronic device #01) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (100, 300, 10-1) comprising:
a housing (110, 500) including a front surface (110A), a rear surface (110B), and a side surface (110C) at least partially surrounding a space between the front surface (110A) and the rear surface (110B);
a display (101, 200, 400) disposed in an inner space of the housing (110, 500) to be visible from exterior and including a display area; and
one or more image sensors disposed under the display to overlap the display area,
wherein
the display (101, 200, 400) includes a display panel, a polarizing layer disposed on the display panel, and an optical compensation film disposed on the polarizing layer,
the optical compensation film has a phase difference of 2,000 to 8,000 nm,
the display (101, 200, 400) includes an under-display camera area (611, 911) corresponding to the one or more image sensors and a display area excluding the under-display camera area (611, 911), with a smaller number of pixels arranged in the under-display camera area (611, 911) than in the display area, and
the display area and the under-display camera area display different resolutions.

2. The electronic device (100, 300, 10-1) of claim 1, wherein the optical compensation film has a thickness of 20 to 100 µm.

3. The electronic device (100, 300, 10-1) of claim 1, wherein the optical compensation film is disposed to correspond to an entire surface of the display panel.

4. The electronic device (100, 300, 10-1) of claim 1, wherein the display (101, 200, 400) further includes a window glass disposed on the polarizing layer.

5. The electronic device (100, 300, 10-1) of claim 4, wherein the optical compensation film includes:
a first optical compensation film disposed between the polarizing layer and the window glass; and
a second optical compensation film disposed on the window glass.

6. The electronic device (100, 300, 10-1) of claim 1, wherein the optical compensation film includes:
a first optical compensation film disposed on the polarizing layer; and
a second optical compensation film disposed on the first optical compensation film.

7. The electronic device (100, 300, 10-1) of claim 1, wherein the display (101, 200, 400) further includes a window glass disposed on the display panel.

8. The electronic device (100, 300, 10-1) of claim 7, wherein the optical compensation film is disposed adjacent to the window glass.

9. The electronic device (100, 300, 10-1) of claim 7, wherein the optical compensation film includes:
a first optical compensation film disposed between the display panel and the window glass; and
a second optical compensation film disposed on the window glass.

10. The electronic device (100, 300, 10-1) of claim 7, wherein the optical compensation film is disposed under the window glass, and
the electronic device further includes a protective film disposed on the window glass.

11. The electronic device (100, 300, 10-1) of claim 4
wherein the display (101, 200, 400) includes a protective film which is disposed side by side in a horizontal direction on the window glass with the optical compensation film.

## Patentansprüche

1. Elektronische Vorrichtung (100, 300, 10-1), umfassend:
ein Gehäuse (110, 500), das eine Vorderfläche (110A), eine Rückfläche (110B) und eine Seitenfläche (110C), die zumindest teilweise einen Raum zwischen der Vorderfläche (110A) und der Rückfläche (110B) umgibt, beinhaltet;
eine Anzeige (101, 200, 400), die in einem Innenraum des Gehäuses (110, 500) vorgesehen ist, um von außen sichtbar zu sein und einen Anzeigebereich beinhaltet; und
einen oder mehrere Bildsensoren, die unter der Anzeige vorgesehen sind, um den Anzeigebereich zu überlappen,
wobei
die Anzeige (101, 200, 400) ein Anzeigefeld, eine Polarisationsschicht, die auf dem Anzeigefeld vorgesehen ist, und einen optischen Kompensationsfilm, der auf der Polarisationsschicht vorgesehen ist, beinhaltet,
der optische Kompensationsfilm eine Phasendifferenz von 2.000 bis 8.000 nm aufweist,
die Anzeige (101, 200, 400) einen Unteranzeigekamerabereich (611, 911), der dem einen oder den mehreren Bildsensoren entspricht, und einen Anzeigebereich, der den Unteranzeigekamerabereich (611, 911) ausschließt, beinhaltet, wobei eine kleinere Anzahl an Pixeln in dem Unteranzeigekamerabereich (611, 911) als in dem Anzeigebereich angeordnet ist, und
der Anzeigebereich und der Unteranzeigekamerabereich unterschiedliche Auflösungen anzeigen.

2. Elektronische Vorrichtung (100, 300, 10-1) nach Anspruch 1, wobei der optische Kompensationsfilm eine Dicke von 20 bis 100 µm aufweist.

3. Elektronische Vorrichtung (100, 300, 10-1) nach Anspruch 1, wobei der optische Kompensationsfilm vorgesehen ist, um einer gesamten Fläche des Anzeigefeldes zu entsprechen.

4. Elektronische Vorrichtung (100, 300, 10-1) nach Anspruch 1, wobei die Anzeige (101, 200, 400) ferner ein Fensterglas beinhaltet, das auf der Polarisationsschicht vorgesehen ist.

5. Elektronische Vorrichtung (100, 300, 10-1) nach Anspruch 4, wobei der optische Kompensationsfilm Folgendes beinhaltet:
einen ersten optischen Kompensationsfilm, der zwischen der Polarisationsschicht und dem Fensterglas vorgesehen ist; und
einen zweiten optischen Kompensationsfilm, der auf dem Fensterglas vorgesehen ist.

6. Elektronische Vorrichtung (100, 300, 10-1) nach Anspruch 1, wobei der optische Kompensationsfilm Folgendes beinhaltet:
einen ersten optischen Kompensationsfilm, der auf der Polarisationsschicht vorgesehen ist; und
einen zweiten optischen Kompensationsfilm, der auf dem ersten optischen Kompensationsfilm vorgesehen ist.

7. Elektronische Vorrichtung (100, 300, 10-1) nach Anspruch 1, wobei die Anzeige (101, 200, 400) ferner ein Fensterglas beinhaltet, das auf dem Anzeigefeld vorgesehen ist.

8. Elektronische Vorrichtung (100, 300, 10-1) nach Anspruch 7, wobei der optische Kompensationsfilm benachbart zu dem Fensterglas vorgesehen ist.

9. Elektronische Vorrichtung (100, 300, 10-1) nach Anspruch 7, wobei der optische Kompensationsfilm Folgendes beinhaltet:
einen ersten optischen Kompensationsfilm, der zwischen dem Anzeigefeld und dem Fensterglas vorgesehen ist; und
einen zweiten optischen Kompensationsfilm, der auf dem Fensterglas vorgesehen ist.

10. Elektronische Vorrichtung (100, 300, 10-1) nach Anspruch 7, wobei der optische Kompensationsfilm unter dem Fensterglas vorgesehen ist, und
die elektronische Vorrichtung ferner einen Schutzfilm beinhaltet, der auf dem Fensterglas vorgesehen ist.

11. Elektronische Vorrichtung (100, 300, 10-1) nach Anspruch 4,
wobei die Anzeige (101, 200, 400) einen Schutzfilm beinhaltet, der Seite an Seite in einer horizontalen Richtung auf dem Fensterglas mit dem optischen Kompensationsfilm vorgesehen ist.

## Revendications

1. Dispositif électronique (100, 300, 10-1) comprenant :
un boîtier (110, 500) comprenant une surface avant (110A), une surface arrière (110B) et une surface latérale (110C) entourant au moins partiellement un espace entre la surface avant (110A) et la surface arrière (110B) ;
un afficheur (101, 200, 400) disposé dans un espace interne du boîtier (110, 500) pour être visible de l'extérieur et comprenant une zone d'affichage ; et
un ou plusieurs capteurs d'image disposés sous l'afficheur pour chevaucher la zone d'affichage,
ledit afficheur (101, 200, 400) comprenant un panneau d'affichage, une couche de polarisation disposée sur le panneau d'affichage, et un film de compensation optique disposé sur la couche de polarisation,
ledit film de compensation optique comportant une différence de phase de 2000 à 8000 nm,
ledit afficheur (101, 200, 400) comprenant une zone de caméra sous l'afficheur (611, 911) correspondant au ou aux capteurs d'image et une zone d'affichage à l'exclusion de la zone de caméra sous l'afficheur (611, 911), ledit nombre de pixels agencés dans la zone de caméra sous l'afficheur (611, 911) étant plus petit que dans la zone d'affichage, et
ladite zone d'affichage et ladite zone de caméra sous-l'afficheur affichant des résolutions différentes.

2. Dispositif électronique (100, 300, 10-1) de la revendication 1, ledit film de compensation optique comportant une épaisseur de 20 à 100 µm.

3. Dispositif électronique (100, 300, 10-1) de la revendication 1, ledit film de compensation optique étant disposé pour correspondre à une surface entière du panneau d'affichage.

4. Dispositif électronique (100, 300, 10-1) de la revendication 1, ledit afficheur (101, 200, 400) comprenant en outre une vitre disposée sur ladite couche de polarisation.

5. Dispositif électronique (100, 300, 10-1) de la revendication 4, ledit film de compensation optique comprenant :
un premier film de compensation optique disposé entre la couche de polarisation et la vitre ; et
un second film de compensation optique disposé sur la vitre.

6. Dispositif électronique (100, 300, 10-1) de la revendication 1, ledit film de compensation optique comprenant :
un premier film de compensation optique disposé sur la couche de polarisation ; et
un second film de compensation optique disposé sur le premier film de compensation optique.

7. Dispositif électronique (100, 300, 10-1) de la revendication 1, ledit afficheur (101, 200, 400) comprenant en outre une vitre disposée sur ledit panneau d'affichage.

8. Dispositif électronique (100, 300, 10-1) de la revendication 7, ledit film de compensation optique étant disposé adjacent à la vitre.

9. Dispositif électronique (100, 300, 10-1) de la revendication 7, ledit film de compensation optique comprenant :
un premier film de compensation optique disposé entre le panneau d'affichage et la vitre ; et
un second film de compensation optique disposé sur la vitre.

10. Dispositif électronique (100, 300, 10-1) de la revendication 7, ledit film de compensation optique étant disposé sous la vitre, et
ledit dispositif électronique comprenant en outre un film de protection disposé sur la vitre.

11. Dispositif électronique (100, 300, 10-1) de la revendication 4,
ledit afficheur (101, 200, 400) comprenant un film de protection qui est disposé côte à côte dans une direction horizontale sur la vitre avec le film de compensation optique.
